# EUROPEAN PATENT APPLICATION

(11) **EP 4 369 301 A1**
(43) Date of publication of application: **15.05.2024**
(21) Application number: 22837543.2
(22) Date of filing: 28.06.2022
(51) Int. Cl.: G06T 9/40

(54) **THREE-DIMENSIONAL DATA ENCODING METHOD, THREE-DIMENSIONAL DATA DECODING METHOD, THREE-DIMENSIONAL DATA ENCODING DEVICE, AND THREE-DIMENSIONAL DATA DECODING DEVICE**

(30) Priority: 07.07.2021 US 202163219124 P
(71) Applicant: Panasonic Intellectual Property Corporation of America, Torrance, CA 90504 (US)
(72) Inventor: NISHI, Takahiro, Kadoma-shi, Osaka 571-0057 (JP); SUGIO, Toshiyasu, Kadoma-shi, Osaka 571-0057 (JP); IGUCHI, Noritaka, Kadoma-shi, Osaka 571-0057 (JP)
(74) Representative: Grünecker Patent- und Rechtsanwälte PartG mbB
(86) International application number: PCT/JP2022/025791
(87) International publication number: WO 2023/282127

(57) **Abstract**

A three-dimensional data encoding method includes performing at least one of: a first process of determining a first context based on first identification information identifying a first point cloud including a first prediction point that is referred to for calculating a predicted value of a first three-dimensional point according to inter prediction, and arithmetic-encoding, using the first context determined, second identification information identifying the first prediction point; or a second process of determining a second context based on at least one of the first identification information or the second identification information, and arithmetic-encoding, using the second context determined, a prediction residual of the first three-dimensional point.

## Description

### [Technical Field]

The present disclosure relates to a three-dimensional data encoding method, a three-dimensional data decoding method, a three-dimensional data encoding device, and a three-dimensional data decoding device.

### [Background Art]

Devices or services utilizing three-dimensional data are expected to find their widespread use in a wide range of fields, such as computer vision that enables autonomous operations of cars or robots, map information, monitoring, infrastructure inspection, and video distribution. Three-dimensional data is obtained through various means including a distance sensor such as a rangefinder, as well as a stereo camera and a combination of a plurality of monocular cameras.

Methods of representing three-dimensional data include a method known as a point cloud scheme that represents the shape of a three-dimensional structure by a point cloud in a three-dimensional space. In the point cloud scheme, the positions and colors of a point cloud are stored. While point cloud is expected to be a mainstream method of representing three-dimensional data, a massive amount of data of a point cloud necessitates compression of the amount of three-dimensional data by encoding for accumulation and transmission, as in the case of a two-dimensional moving picture (examples include Moving Picture Experts Group-4 Advanced Video Coding (MPEG-4 AVC) and High Efficiency Video Coding (HEVC) standardized by MPEG).

Meanwhile, point cloud compression is partially supported by, for example, an open-source library (Point Cloud Library) for point cloud-related processing.

Furthermore, a technique for searching for and displaying a facility located in the surroundings of the vehicle by using three-dimensional map data is known (see, for example, Patent Literature (PTL) 1).

### [Citation List]

### [Patent Literature]

[PTL 1] International Publication WO 2014/020663

### [Summary of Invention]

### [Technical Problem]

There has been a demand for improving coding efficiency in a three-dimensional data encoding process and a three-dimensional data decoding process.

The present disclosure has an object to provide a three-dimensional data encoding method, a three-dimensional data decoding method, a three-dimensional data encoding device, or a three-dimensional data decoding device that may be capable of improving coding efficiency.

### [Solution to Problem]

A three-dimensional data encoding method according to an aspect of the present disclosure includes: performing at least one of: a first process of determining a first context based on first identification information identifying a first point cloud including a first prediction point that is referred to for calculating a predicted value of a first three-dimensional point according to inter prediction, and arithmetic-encoding, using the first context determined, second identification information identifying the first prediction point; or a second process of determining a second context based on at least one of the first identification information or the second identification information, and arithmetic-encoding, using the second context determined, a prediction residual of the first three-dimensional point.

### [Advantageous Effects of Invention]

The present disclosure can provide a three-dimensional data encoding method, or the like, that may be capable of improving coding efficiency.

### [Brief Description of Drawings]

[FIG. 1]

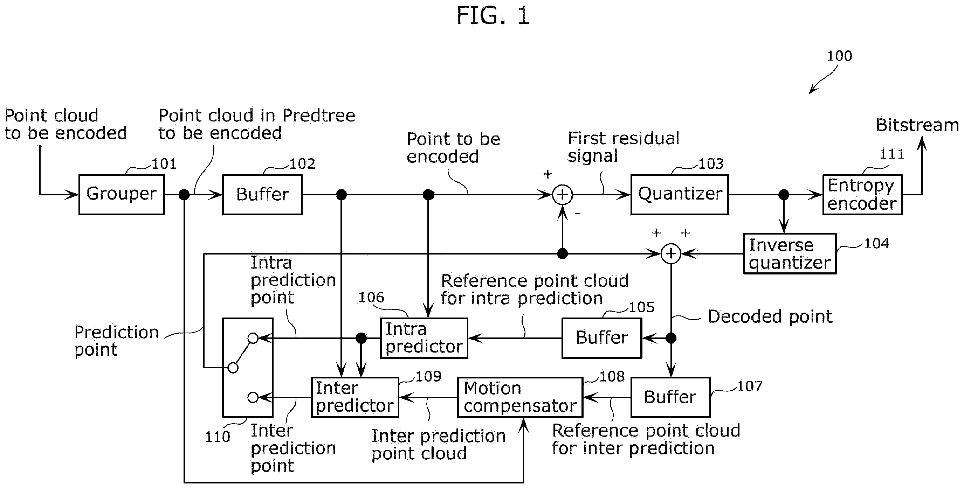

   FIG. 1 is a block diagram of a three-dimensional data encoding device according to an embodiment.
[FIG. 2]

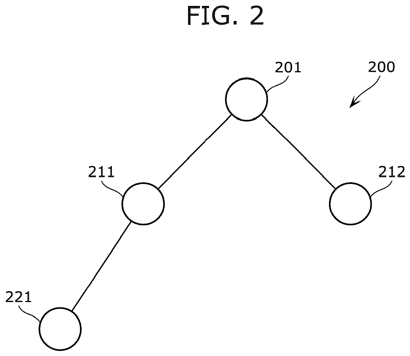

   FIG. 2 is a diagram illustrating an example of a prediction tree according to the embodiment.
[FIG. 3]

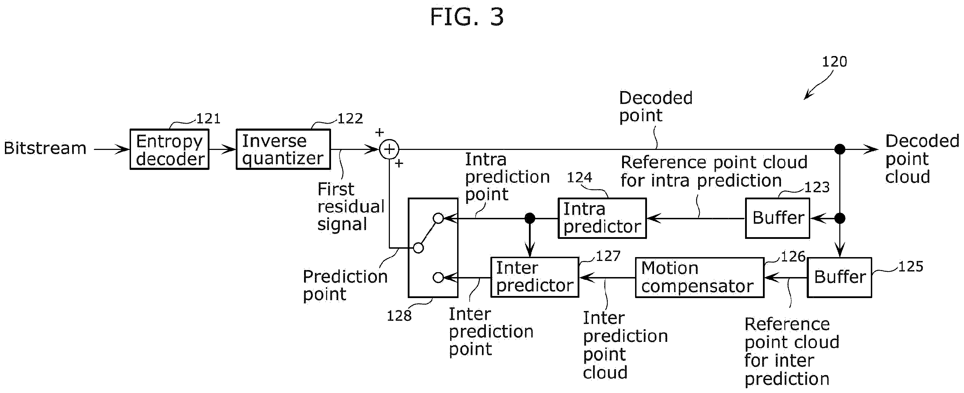

   FIG. 3 is a block diagram of a three-dimensional data decoding device according to the embodiment.
[FIG. 4]

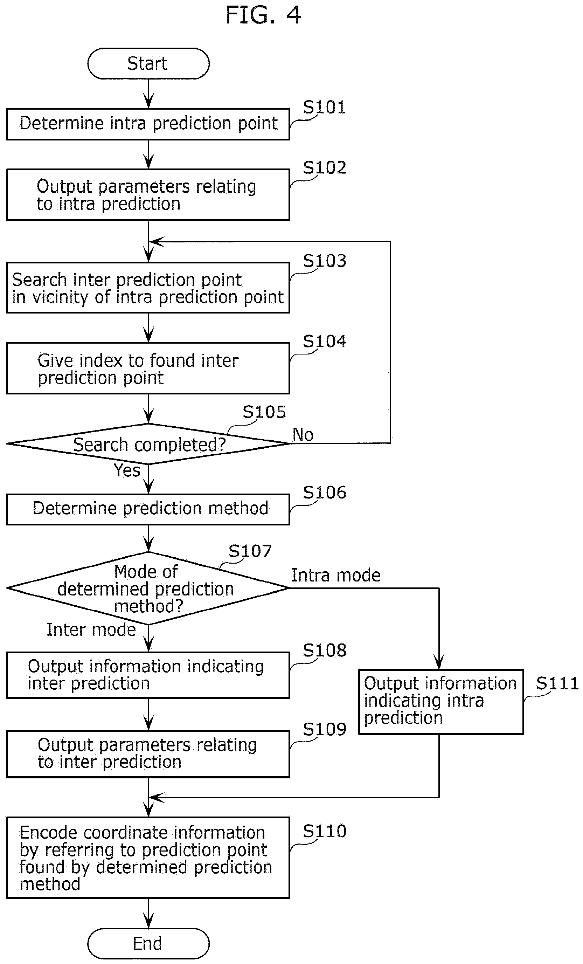

   FIG. 4 is a flowchart illustrating an example of a procedure of encoding each three-dimensional point in a prediction tree (Predtree) by the three-dimensional data encoding device.
[FIG. 5]

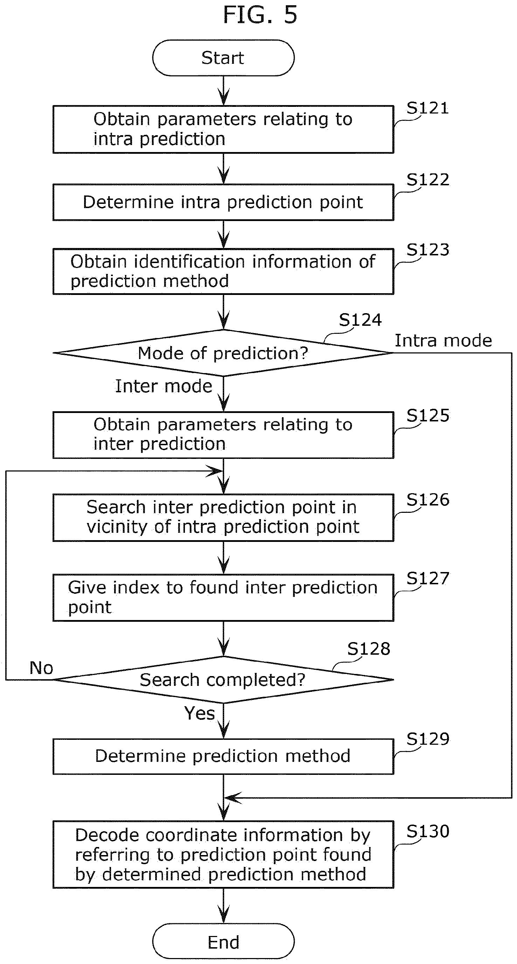

   FIG. 5 is a flowchart illustrating an example of a procedure of decoding each three-dimensional point in a prediction tree (Predtree) by the three-dimensional data decoding device.
[FIG. 6]

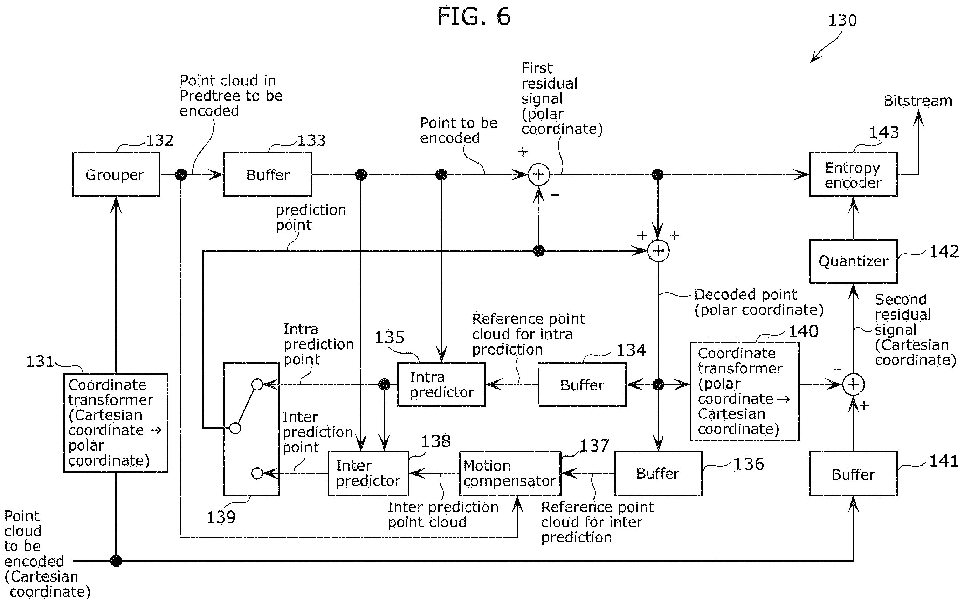

   FIG. 6 is a block diagram of a three-dimensional data encoding device according to a variation of the embodiment.
[FIG. 7]

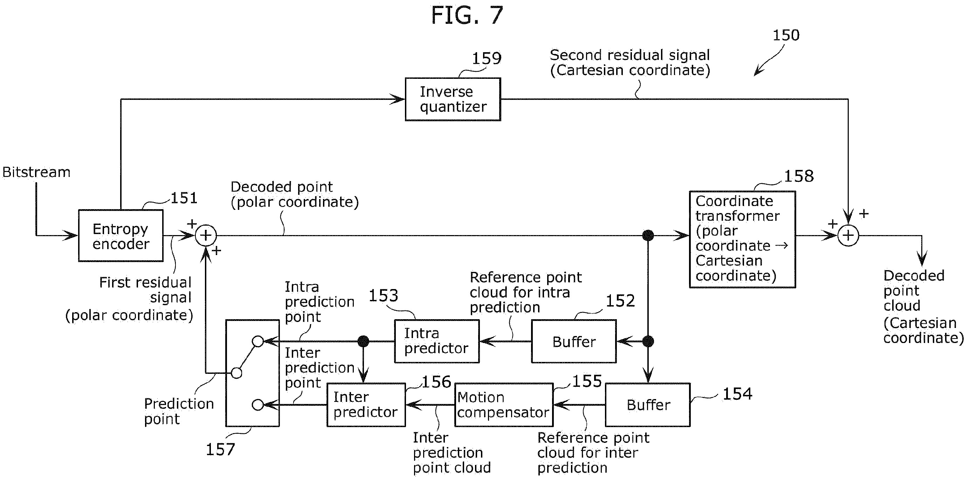

   FIG. 7 is a block diagram of a three-dimensional data decoding device according to the variation of the embodiment.
[FIG. 8]

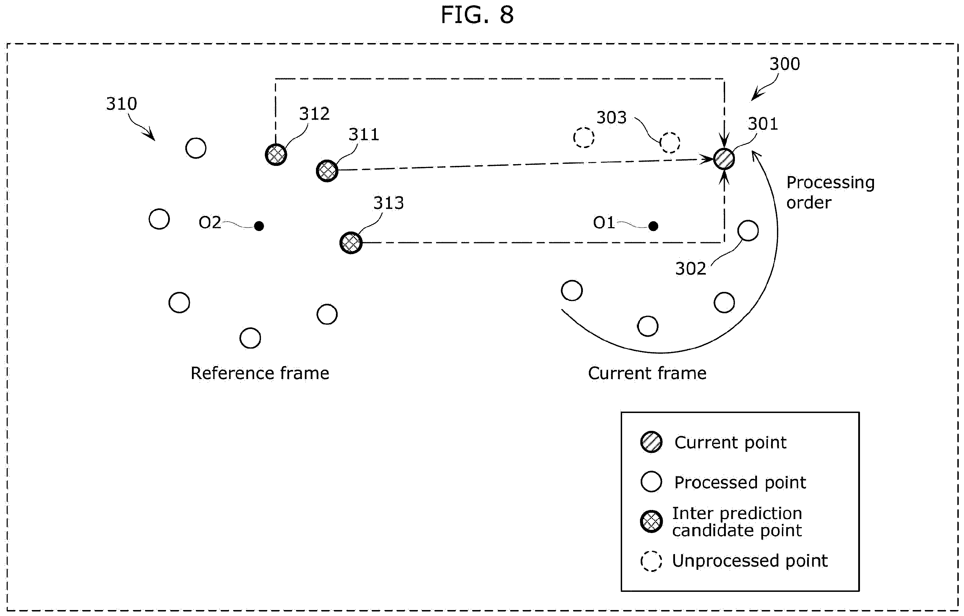

   FIG. 8 is a diagram for describing an example of an inter prediction method according to the embodiment.
[FIG. 9]

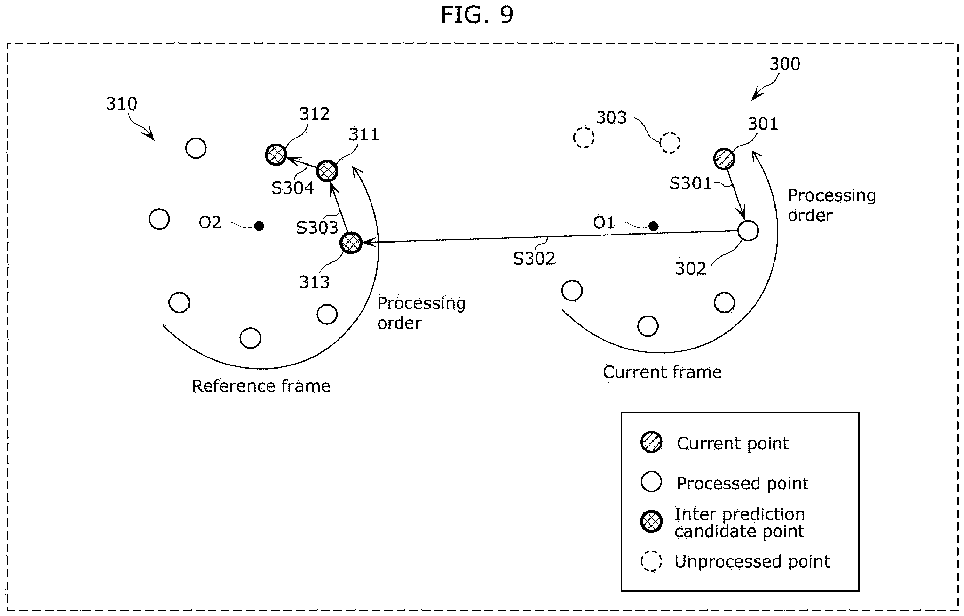

   FIG. 9 is a diagram for describing an example of a procedure of determining an inter prediction candidate point in the inter prediction method according to the embodiment.
[FIG. 10]

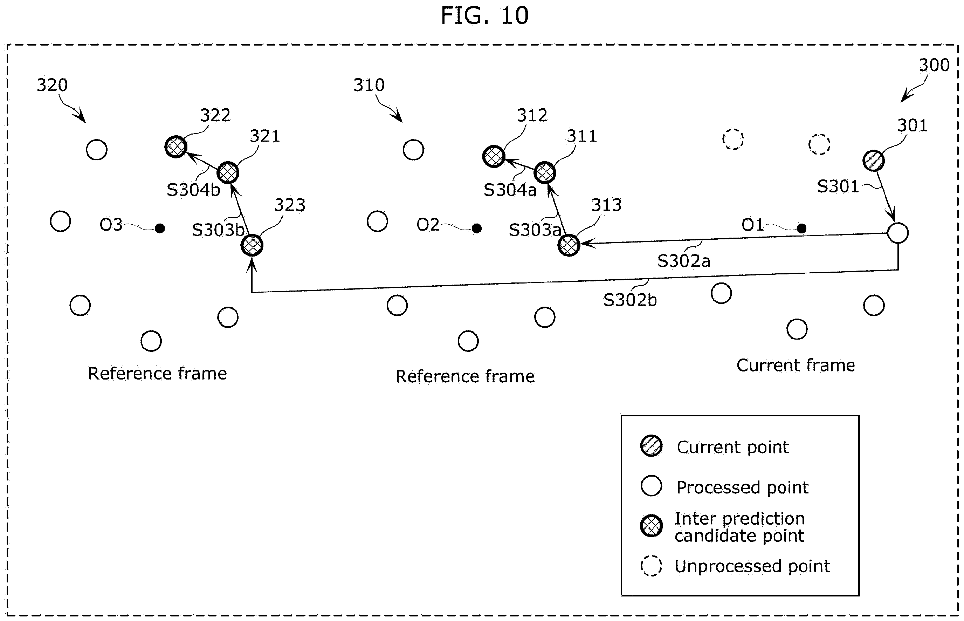

   FIG. 10 is a diagram for describing an example of the inter prediction method extended for inter prediction involving multiple reference frames.
[FIG. 11]

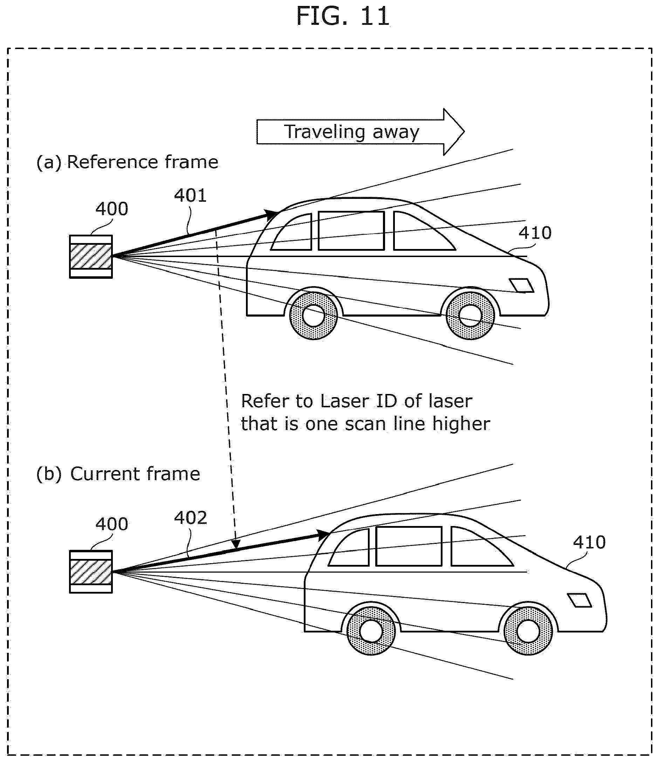

   FIG. 11 is a diagram for describing an example in which a method of determining a prediction point is applied to elevation angle directions.
[FIG. 12]

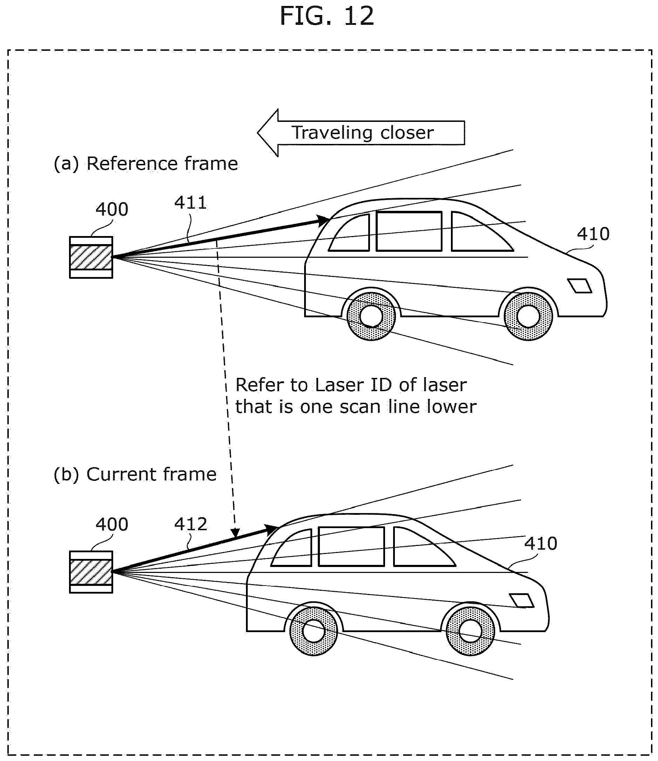

   FIG. 12 is a diagram for describing an example in which a method of determining a prediction point is applied to elevation angle directions.
[FIG. 13]

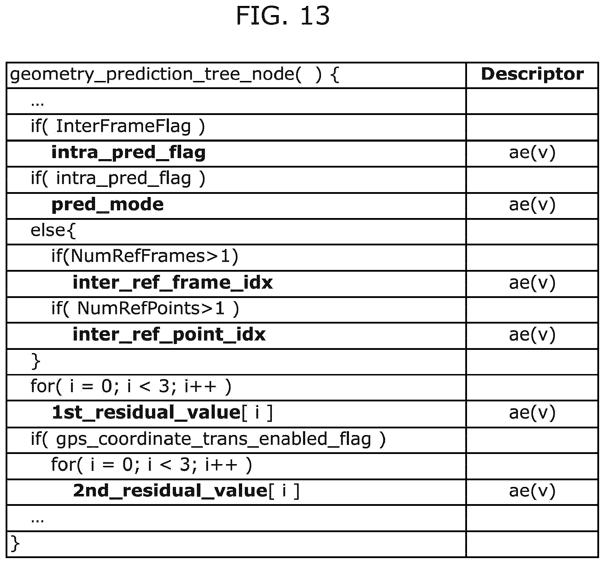

   FIG. 13 illustrates an example of a syntax for a three-dimensional point according to the embodiment.
[FIG. 14]

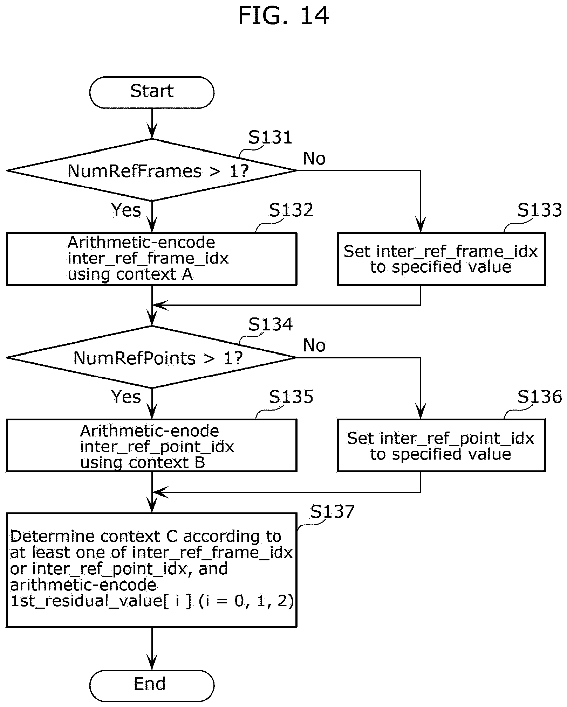

   FIG. 14 is a flowchart illustrating an example of arithmetic encoding in the case of inter prediction according to the embodiment.
[FIG. 15]

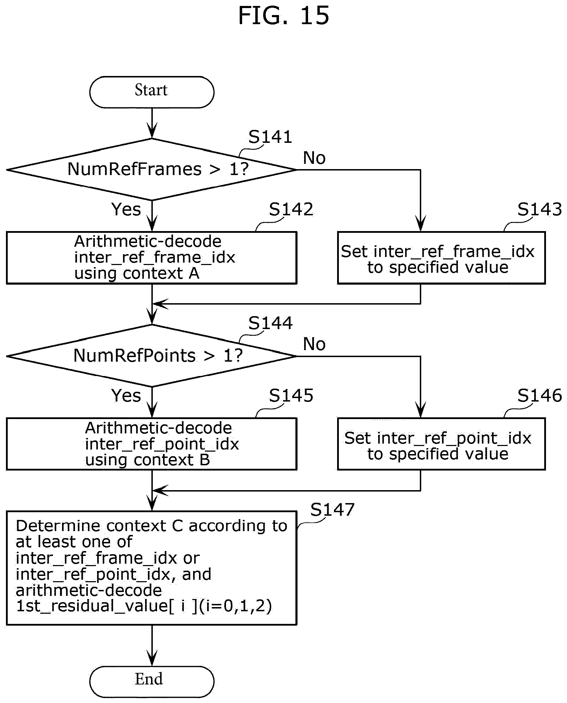

   FIG. 15 is a flowchart illustrating an example of arithmetic decoding in the case of inter prediction according to the embodiment.
[FIG. 16]

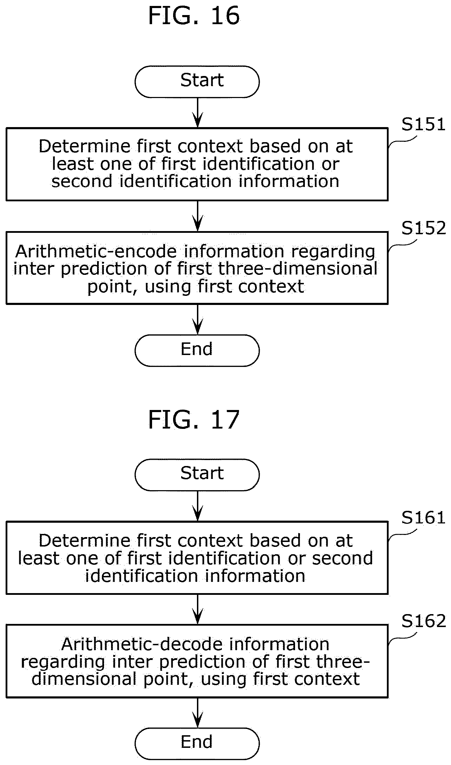

   FIG. 16 is a flowchart illustrating an example of a three-dimensional data encoding process according to the embodiment.
[FIG. 17]
   FIG. 17 is a flowchart illustrating an example of a three-dimensional data decoding process according to the embodiment.

### [Description of Embodiments]

A three-dimensional data encoding method according to an aspect of the present disclosure includes performing at least one of: a first process of determining a first context based on first identification information identifying a first point cloud including a first prediction point that is referred to for calculating a predicted value of a first three-dimensional point according to inter prediction, and arithmetic-encoding, using the first context determined, second identification information identifying the first prediction point; or a second process of determining a second context based on at least one of the first identification information or the second identification information, and arithmetic-encoding, using the second context determined, a prediction residual of the first three-dimensional point.

When the point cloud that is referred to for inter prediction of the first three-dimensional point and the point cloud that is referred to for inter prediction of another three-dimensional point are the same, the identification information of prediction points in the point cloud tend to be similar. In view of this, in the first process, second identification information identifying a prediction point is arithmetic-encoded using the first context that is based on first identification information identifying the point cloud. Accordingly, it is possible for encoding efficiency to improve.

When inter prediction is performed on the first three-dimensional point and another three-dimensional point, and at least one of the point clouds to be referred to in the inter prediction or the prediction points in the point cloud are the same, there is a tendency for the prediction residual of the first three-dimensional point and the prediction residual of the other three-dimensional point to be approximately the same. In view of this, in the second process, the prediction residual is arithmetic-encoded using the second context that is based on at least one of first identification information identifying the point cloud or second identification information identifying the prediction point. Accordingly, it is possible for encoding efficiency to improve.

Furthermore, the prediction residual may be a difference between a position of the first three-dimensional point and a predicted value of the position. However, the prediction residual may be the difference between an attribute value of the first three-dimensional point and a predicted value of the attribute value.

Furthermore, the three-dimensional data encoding method may further include: determining a third context based on first identification information that identifies a second point cloud and is provided for a second three-dimensional point, the second point cloud including a second prediction point that is referred to in inter prediction of the second three-dimensional point, the second three-dimensional point being located in a surrounding area of the first three-dimensional point; and arithmetic-encoding, using the third context determined, the first identification information provided for the first three-dimensional point.

Accordingly, since a third context for arithmetic-encoding the first identification information of the first point cloud is determined based on the first identification information of the second point cloud, the code amount can be reduced. Therefore, encoding efficiency can be improved.

It should be noted that the first process and the second process are not required for performing arithmetic-encoding of the first identification information using the third context.

Furthermore, the first point cloud may be one of a third point cloud that has not been motion compensated and a fourth point cloud obtained by performing motion compensation on the third point cloud, and the first identification information may be different depending on whether the first point cloud is the third point cloud or the fourth point cloud.

When performing inter prediction on the first three-dimensional point, even if prediction points belong to the same point cloud, there is a tendency for information regarding the inter prediction of the first three-dimensional point to significantly different depending on whether the point cloud is the third point cloud that has been motion compensated or the fourth point cloud that has not been compensated. For this reason, by distinguishing between the third point cloud that has been motion compensated and the fourth point cloud that has not been compensated, information regarding inter prediction can be arithmetic-encoded using a first context that is in accordance with whether the point cloud is motion compensated or not. Therefore, the precision of predicting information regarding inter prediction can be improved, and it may be possible to reduce the code amount. Therefore, it may be possible to improve encoding efficiency.

A three-dimensional data decoding method according to an aspect of the present disclosure includes performing at least one of: a first process of determining a first context based on first identification information identifying a first point cloud including a first prediction point that is referred to for calculating a predicted value of a first three-dimensional point according to inter prediction, and arithmetic-decoding, using the first context determined, second identification information identifying the first prediction point; or a second process of determining a second context based on at least one of the first identification information or the second identification information, and arithmetic-decoding, using the second context determined, a prediction residual of the first three-dimensional point.

When the point cloud that is referred to for inter prediction of the first three-dimensional point and the point cloud that is referred to for inter prediction of another three-dimensional point are the same, the identification information of prediction points in the point cloud tend to be similar. In view of this, in the first process, it is possible to appropriately arithmetic-decode second identification information identifying a prediction point, whose code amount may have been reduced as a result of being arithmetic-encoded using the first context that is based on first identification information identifying the point cloud.

When inter prediction is performed on the first three-dimensional point and another three-dimensional point, and at least one of the point clouds to be referred to in the inter prediction or the prediction points in the point cloud are the same, there is a tendency for the prediction residual of the first three-dimensional point and the prediction residual of the other three-dimensional point to be approximately the same. In view of this, in the second process, it is possible to appropriately arithmetic-decode the prediction residual whose code amount may have been reduced as a result of being arithmetic-encoded using the second context that is based on at least one of first identification information identifying the point cloud or second identification information identifying the prediction point.

Furthermore, the prediction residual may be a difference between a position of the first three-dimensional point and a predicted value of the position. However, the prediction residual may be the difference between an attribute value of the first three-dimensional point and a predicted value of the attribute value.

Furthermore, the three-dimensional data decoding method may further include: determining a third context based on first identification information that identifies a second point cloud and is provided for a second three-dimensional point, the second point cloud including a second prediction point that is referred to in inter prediction of the second three-dimensional point, the second three-dimensional point being located in a surrounding area of the first three-dimensional point; and arithmetic-decoding, using the third context determined, the first identification information provided for the first three-dimensional point.

Accordingly, since a third context for arithmetic-decoding the first identification information of the first point cloud is determined based on the first identification information of the second point cloud, it is possible to appropriately arithmetic-decode the first identification information of the first point cloud, whose code amount may have been reduced as a result of being arithmetic-encoded using the third context.

It should be noted that the first process and the second process are not required for performing arithmetic-encoding of the first identification information using the third context.

Furthermore, the first point cloud may be one of a third point cloud that has not been motion compensated and a fourth point cloud obtained by performing motion compensation on the third point cloud, and the first identification information may be different depending on whether the first point cloud is the third point cloud or the fourth point cloud.

When performing inter prediction on the first three-dimensional point, even if prediction points belong to the same point cloud, there is a tendency for information regarding the inter prediction of the first three-dimensional point to significantly different depending on whether the point cloud is the third point cloud that has been motion compensated or the fourth point cloud that has not been compensated. For this reason, by distinguishing between the third point cloud that has been motion compensated and the fourth point cloud that has not been compensated, it is possible to appropriately arithmetic-decode information regarding inter prediction, whose code amount may have been reduced as a result of being arithmetic-encoded using a first context that is in accordance with whether the point cloud is motion compensated or not.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

Hereinafter, embodiments will be specifically described with reference to the drawings. It is to be noted that each of the following embodiments indicate a specific example of the present disclosure. The numerical values, shapes, materials, constituent elements, the arrangement and connection of the constituent elements, steps, the processing order of the steps, etc., indicated in the following embodiments are mere examples, and thus are not intended to limit the present disclosure. Among the constituent elements described in the following embodiments, constituent elements not recited in any one of the independent claims will be described as optional constituent elements.

### [EMBODIMENT]

In the present embodiment, the case where one of inter prediction and intra prediction is performed on geometry information of a point cloud (point cloud) in a switching manner will be described.

FIG. 1 is a block diagram of three-dimensional data encoding device 100 according to the present embodiment. FIG. 1 illustrates processors relating to encoding geometry information (geometry) of a point cloud. However, three-dimensional data encoding device 100 may include other processors such as processors that performs encoding or the like of attribute information of the point cloud. In inter prediction and intra prediction, a point cloud to be encoded is encoded while an encoded point cloud is referred to.

Here, inter prediction is a prediction method of calculating a predicted value using a second reference three-dimensional point belonging to a second three-dimensional point cloud (second frame) different from a first three-dimensional point cloud (first frame) to which the current three-dimensional point to be encoded or decoded belongs. Inter prediction is a prediction method of calculating a predicted value using a first reference three-dimensional point belonging to a first three-dimensional point cloud (first frame) to which the current three-dimensional point to be encoded or decoded belongs.

Three-dimensional data encoding device 100 includes grouper 101, buffer 102, quantizer 103, inverse quantizer 104, buffer 105, intra predictor 106, buffer 107, motion compensator 108, inter predictor 109, switcher 110, and entropy encoder 111.

From a target point cloud which is data of an input point cloud to be encoded, grouper 101 extracts a point cloud to be a prediction tree (Predtree) which is a unit for encoding and sets the point cloud as one group. In the input target point clouds, a position of a point cloud is represented by three-dimensional polar coordinates.

FIG. 2 is a diagram illustrating an example of a prediction tree according to the embodiment.

Prediction tree 200 indicates a reference relationship in prediction of positions of three-dimensional points constituting a point cloud set in one group. Prediction tree 200 includes, for example, first node 201, second node 211, and third node 212 that are child nodes of the first node, and fourth node 221 that is a child node of second node 211. First node 201, second node 211, third node 212, and fourth node 221 indicate three-dimensional points that are mutually different. First node 201 is a node higher than second node 211 and third node 212, and second node 211 is a node higher than fourth node 221. First node 201 is a node that is referred to in calculation of a predicted value of second node 211 and calculation of a predicted value of third node 212. First node 201 may be referred to in calculation of a predicted value of fourth node 221. Second node 211 is a node that is referred to in the calculation of the predicted value of fourth node 221. In this manner, one or more nodes higher than a lower node are referred to in calculation of a predicted value of the lower node. Which of the nodes is used and how the predicted values are calculated may be determined in accordance with a prediction mode. The prediction mode may include a mode that sets a fixed value as the predicted value, rather than referring to higher nodes such as the parent node and the grandparent node. For example, the fixed value may be (x,y,z) = (0,0,0) if the positions of the three-dimensional points are expressed in the Cartesian coordinate system, or may be (r,φ,θ) = (r_min,0,0) if the positions of the three-dimensional points are expressed in the polar coordinate system. Here, r_min is the minimum value of the distance r (ptn_radius_min), and notification of this value may be provided in the GDU header (corresponding to a slice).

An encoding order and a decoding order of prediction tree 200 may be a depth-first order or may be a breadth-first order. Prediction tree 200 may be generated by processing three-dimensional points arranged in Morton order, one by one from a beginning three-dimensional point. For example, prediction tree 200 may be generated in such a manner that, in a process of generating prediction tree 200, a three-dimensional point the nearest to a three-dimensional point to be processed becomes a child node of the three-dimensional point to be processed.

The depth-first order is an order determined by performing arrangement of nodes from a root node as a beginning up to a leaf node such that a next node of a node is arranged as a lower node (a child node) of the node and then repeating arrangement of the remaining nodes from a highest node up to a leaf node such that a next node of a node is arranged as a lower node (a child node) of the node. In FIG. 2, the depth-first order is, for example, in the order of first node 201, second node 211, fourth node 221, and third node 212.

The breadth-first order is an order determined by performing arrangement of nodes, from a root node as a beginning, such that nodes included in each layer of a prediction tree are arranged in ascending order of depth of layer. In FIG. 2, the breadth-first order is, for example, in the order of first node 201, second node 211, third node 212, and fourth node 221.

It should be noted that polar coordinates of a point cloud to be encoded may be polar coordinates to which Cartesian coordinates of the point cloud being input are transformed or may be polar coordinates of the point cloud itself being input. For example, when a distance, a horizontal angle, and an elevation angle of a target point with respect to a sensor position are assumed to be distance d, horizontal angle Φ, and elevation angle θ, respectively, these three elements may be used to represent the polar coordinates as polar coordinates (d, Φ, θ). Alternatively, elevation angle θ may be represented by information from a sensor such as laser_id of Lidar, instead. For example, the polar coordinate may be represented as (d, Φ, laser_id) by using laser_id having a scanning angle with a value closest to elevation angle θ instead of the elevation angle. In other words, laser_id may be used in this manner as a value indicating elevation angle θ in a polar coordinate. Using laser_id instead of elevation angle θ can reduce an amount of information, thus enabling improvement of coding efficiency.

Buffer 102 retains a generated prediction tree. For example, buffer 102 may initialize retained data for each prediction tree. Three-dimensional points included in a prediction tree (Predtree) retained in buffer 102 are subjected one by one to a process of encod i ng.

Then, a difference (first residual signal) between each of the three-dimensional points included in the prediction tree (Predtree) and a selected prediction point is calculated. This first residual signal will be referred to also as a prediction residual. The first residual signal is an example of a first residual.

Quantizer 103 quantizes the first residual signal. Entropy encoder 111 entropy encodes the quantized first residual signal to generate encoded data and outputs (generates) a bitstream including the encoded data.

Inverse quantizer 104 inverse quantizes the first residual signal quantized by quantizer 103. The inverse quantized first residual signal is added to a predicted value based on the selected prediction point (one or more candidate points) to be decoded as a three-dimensional point (reference point) to be used in the intra prediction and the inter prediction. The predicted value is calculated based on geometry information of one or more candidate points. Buffer 105 retains a decoded reference point cloud for the intra prediction. For example, buffer 105 may initialize retained data for each prediction tree (target point cloud). Buffer 107 retains a reference point cloud for the inter prediction. For example, buffer 107 may initialize retained data for each prediction tree (target point cloud).

Intra predictor 106 determines an intra prediction point to be used in the prediction by a predetermined method while referring to information in a prediction tree (Predtree) including a current three-dimensional point to be encoded, such as three-dimensional points included in the prediction tree (the reference point cloud for the intra prediction). For example, intra predictor 106 may determine the intra prediction point by, for example, extrapolation using two three-dimensional points (decoded points) that are inverse quantized immediately before the current three-dimensional point (e.g., an ancestor node in the prediction tree such as a parent node).

Motion compensator 108 generates an inter prediction point cloud which is a reference point cloud for the inter prediction after alignment, by reproducing the encoded point cloud based on the three-dimensional points (decoded points) included in the prediction tree (Predtree) including the current three-dimensional point, detecting a displacement between the encoded point cloud and the point cloud to be encoded (motion detection), and correcting the encoded point cloud based on the detected displacement (motion compensation).

Based on the inter prediction point cloud subjected to the motion compensation, inter predictor 109 determines an inter prediction point to be used in the prediction, by a predetermined method. For example, from the inter prediction point cloud, inter predictor 109 may select a point nearest to the intra prediction point as the inter prediction point or may select, without reference to the intra prediction point, a three-dimensional point (e.g., a three-dimensional point nearest to a three-dimensional point encoded immediately before the current three-dimensional point) in the vicinity of a three-dimensional point encoded immediately before the current three-dimensional point (or encoded last) (e.g., a three-dimensional point corresponding to an ancestor node in the prediction tree such as a parent node).

Inter predictor 109 may determine the inter prediction point using decoded horizontal angle Φp and laser_idp of a parent node in the prediction tree (Predtree). For example, from among the inter prediction point cloud, inter predictor 109 may select a three-dimensional point that has the same laser_id as that of decoded laser_idp of the parent node and has Φ with a value close to a value of Φp + offset obtained by adding offset to decoded horizontal angle Φp of the parent node, as the inter prediction point. Here, offset is a value equal to or greater than zero, and a value of offset may be determined in accordance with, for example, an angular velocity of horizontal scanning of lidar. Accordingly, three-dimensional data encoding device 100 can generate, from the inter prediction point cloud, a predicted value having values close to values of polar coordinates (d, Φ, laser_id) of a point to be encoded. Thus, coding efficiency can be improved. The point to be encoded is an example of a first three-dimensional point. The point to be encoded may be an example of a second three-dimensional point.

Switcher 110 determines a prediction point to be used in the prediction by selecting one of the intra prediction point and the inter prediction point. In this manner, three-dimensional data encoding device 100 determines geometry information of one or more candidate points from among encoded three-dimensional points as a prediction point and calculates a predicted value based on the prediction point. Intra predictor 106 and inter predictor 109 determines a prediction point (an intra prediction point or an inter prediction point) based on a three-dimensional point encoded immediately before the current three-dimensional point. In other words, three-dimensional data encoding device 100 determines one or more candidate points for calculating the predicted value based on one or more base points from among the encoded three-dimensional points. The one or more base points are three-dimensional points to be encoded immediately before the current three-dimensional point and may be, for example, a three-dimensional point corresponding to a parent node (ancestor node) of one three-dimensional point to be encoded in the prediction tree.

It should be noted that three-dimensional data encoding device 100 may select one of the intra prediction point and the inter prediction point as the prediction point under a procedure illustrated in a flowchart in FIG. 4 described later. Information relating to the prediction (prediction information) as to whether to select one of the intra prediction point and the inter prediction point as the prediction point may be entropy encoded and written in a header part of each three-dimensional point or may be written in such a manner as to be interleaved between three-dimensional points. Information relating to the motion compensation such as motion vectors may be written in a header part of a frame or a prediction tree (Predtree), may be entropy encoded and written in a header part of each three-dimensional point, or may be written in such a manner as to be interleaved between three-dimensional points.

For example, in the case where three-dimensional data encoding device 100 performs encoding while switching a frame of an inter prediction point cloud that is referred to for each node in the prediction tree (Predtree), three-dimensional data encoding device 100 may add an identification number of a reference frame selected in the inter prediction (hereinafter, reference frame number), for each node in the prediction tree (Predtree). Accordingly, three-dimensional data encoding device 100 selects an optimal reference frame number for each node to perform the inter prediction. Thus, coding efficiency can be improved. In addition, three-dimensional data decoding device 120 (see description given later) can determine which reference frame is to be used to generate an inter prediction point by decoding the reference frame number added to each node in a bitstream. Thus, it is possible to appropriately decode a bitstream with improved coding efficiency by selecting the optimal reference frame number for each node to perform the inter prediction.

The reference point cloud for the inter prediction may be a point cloud included in an encoded frame different from a frame to be encoded or may be an encoded point cloud included in the same frame as the frame to be encoded.

In this manner, three-dimensional data encoding device 100 predicts a point to be encoded using the inter prediction in addition to the intra prediction. Thereby, it may be possible to reduce an amount of information of a first residual signal to be entropy encoded, thus enabling improvement of coding efficiency.

It should be noted that three-dimensional data encoding device 100 need not always refer to an inter prediction point. Three-dimensional data encoding device 100 may perform the encoding based only on information of a point cloud to be encoded by, for example, initializing buffer 107 storing a reference point cloud for the inter prediction at predetermined time intervals (e.g., every 1 second, etc.), at predetermined frame intervals (e.g., every 30 frames, etc.), or at any timing for notifying a three-dimensional data decoding device. Accordingly, it becomes possible for the corresponding three-dimensional data decoding device to start a jump playback from a point cloud that is not a beginning of a bitstream and for which an inter prediction point is not referred to. Thus, it may be possible to improve random accessibility or error tolerance of the bitstream.

In the case where three-dimensional data encoding device 100 has coordinates of an input point cloud to be encoded represented by Cartesian coordinates as geometry information, three-dimensional data encoding device 100 encodes the geometry information indicated by the coordinates represented by Cartesian coordinates. In the case where three-dimensional data encoding device 100 has coordinates of an input point cloud to be encoded represented by polar coordinates as geometry information, three-dimensional data encoding device 100 encodes the geometry information indicated by the coordinates represented by polar coordinates.

FIG. 3 is a block diagram of three-dimensional data decoding device 120 according to the present embodiment. FIG. 3 illustrates processors relating to decoding geometry information (geometry) of a point cloud. However, three-dimensional data decoding device 120 may include another processor such as a processor that performs decoding or the like of attribute information of the point cloud. Three-dimensional data decoding device 120 performs inter prediction decoding, in which a point cloud to be decoded is decoded while a decoded point cloud is referred to. For example, three-dimensional data decoding device 120 decodes a bitstream generated by three-dimensional data encoding device 100 illustrated in FIG. 1.

Three-dimensional data decoding device 120 includes entropy decoder 121, inverse quantizer 122, buffer 123, intra predictor 124, buffer 125, motion compensator 126, inter predictor 127, and switcher 128.

Three-dimensional data decoding device 120 obtains a bitstream generated by three-dimensional data encoding device 100.

Entropy decoder 121 entropy decodes an input bitstream for each three-dimensional point in a prediction tree (Predtree) to generate an quantized first residual signal. Inverse quantizer 122 inverse quantizes the quantized first residual signal to reproduce the first residual signal. The first residual signal of each three-dimensional point is added to a predicted value based on a prediction point corresponding to the three-dimensional point and then generated (output) as a decoded point. In other words, three-dimensional data decoding device 120 adds the predicted value and the prediction residual together to calculate geometry information of one three-dimensional point to be decoded.

Buffer 123 retains the generated decoded points as a reference point cloud for the intra prediction. For example, buffer 123 may initialize data retained for each prediction tree (target point cloud). Buffer 125 retains the generated decoded points as a reference point cloud for the inter prediction. For example, buffer 125 may initialize data retained for each prediction tree (target point cloud).

Intra predictor 124 determines an intra prediction point to be used in the prediction by a predetermined method while referring to information in a prediction tree (Predtree) including a three-dimensional point to be decoded, such as three-dimensional points included in the prediction tree (the reference point cloud for the intra prediction). For example, intra predictor 124 may determine the intra prediction point by, for example, extrapolation using two three-dimensional points (decoded points) that are inverse quantized immediately before the three-dimensional point to be decoded (e.g., an ancestor node in the prediction tree such as a parent node).

Motion compensator 126 generates an inter prediction point cloud that is a reference point cloud for the inter prediction after alignment, by reproducing the decoded point cloud based on the three-dimensional points (decoded points) included in the prediction tree (Predtree) including the three-dimensional point to be decoded, and correcting a displacement between the decoded point cloud and the point cloud to be decoded (motion compensation).

Based on the inter prediction point cloud subjected to the motion compensation, inter predictor 127 determines an inter prediction point to be used in the prediction, by a predetermined method. For example, from the inter prediction point cloud, inter predictor 127 may select a point nearest to the intra prediction point as the inter prediction point or may select, without reference to the intra prediction point, a three-dimensional point (e.g., a three-dimensional point nearest to a three-dimensional point decoded immediately before the current three-dimensional point) in the vicinity of a three-dimensional point decoded immediately before the current three-dimensional point (e.g., a three-dimensional point corresponding to an ancestor node in the prediction tree such as a parent node), as the inter prediction point.

Inter predictor 127 may determine the inter prediction point using decoded horizontal angle Φp and laser_idp of a parent node in the prediction tree (Predtree). For example, from among the inter prediction point cloud, inter predictor 127 may select a three-dimensional point that has the same laser_id as that of decoded laser_idp of the parent node and has Φ with a value close to a value of Φp + offset obtained by adding offset to decoded horizontal angle Φp of the parent node, as the inter prediction point. Here, offset is a value equal to or greater than zero, and a value of offset may be determined in accordance with, for example, an angular velocity of horizontal scanning of lidar. It should be noted that notification of the offset may be, for example, provided in a header such as the GPS by three-dimensional data encoding device 100 to three-dimensional data decoding device 120. Accordingly, three-dimensional data decoding device 120 can appropriately decode a bitstream with improved coding efficiency by generating a predicted value having values close to values of polar coordinates (d, Φ, laser_id) of a point to be decoded from the inter prediction point cloud. The point to be decoded is an example of a first three-dimensional point.

Switcher 128 determines a prediction point to be used in the prediction by selecting one of the intra prediction point and the inter prediction point. In this manner, three-dimensional data decoding device 120 determines geometry information of one or more candidate points from among decoded three-dimensional points as a prediction point and calculates a predicted value based on the prediction point. Intra predictor 124 and inter predictor 127 determine a prediction point (an intra prediction point or an inter prediction point) based on a three-dimensional point decoded immediately before the three-dimensional point to be decoded. In other words, three-dimensional data decoding device 120 determines one or more candidate points for calculating the predicted value based on one or more base points from among the decoded three-dimensional points. The one or more base points are three-dimensional points to be encoded immediately before the three-dimensional point to be decoded and may be, for example, a three-dimensional point corresponding to a parent node (ancestor node) of one three-dimensional point to be decoded in the prediction tree.

It should be noted that three-dimensional data decoding device 120 may select one of the intra prediction point and the inter prediction point as the prediction point under a process illustrated in a flowchart in FIG. 5 described later. Three-dimensional data decoding device 120 may select one of the intra prediction point and the inter prediction point as the prediction point based on information relating to the prediction (prediction information) as to whether to select one of the intra prediction point and the inter prediction point as the prediction point. The prediction information may be entropy encoded and written in a header part of each three-dimensional point or may be written in such a manner as to be interleaved between three-dimensional points. Information relating to the motion compensation such as motion vectors may be written in a header part of a frame or a prediction tree (Predtree), may be entropy encoded and written in a header part of each point, or may be written in such a manner as to be interleaved between three-dimensional points. In this manner, three-dimensional data decoding device 120 may be notified of the prediction information or the information relating to the motion compensation by corresponding three-dimensional data encoding device 100. The reference point cloud for the inter prediction may be a point cloud included in an encoded frame different from a frame to be encoded or may be an encoded point cloud included in the same frame as the frame to be encoded. The reference point cloud for the inter prediction may be a point cloud included in an encoded frame different from a frame to be encoded or may be an encoded point cloud included in the same frame as the frame to be encoded.

In this manner, three-dimensional data decoding device 120 predicts a point to be decoded using the inter prediction in addition to the intra prediction, thereby being capable of decoding a point cloud from a bitstream that is encoded while a decoded point cloud is referred to (e.g., the bitstream output from three-dimensional data encoding device 100 in FIG. 1).

It should be noted that three-dimensional data decoding device 120 need not always refer to an inter prediction point. Three-dimensional data decoding device 120 may perform the decoding based only on information of a point cloud to be decoded by, for example, initializing buffer 125 storing a reference point cloud for the inter prediction at predetermined time intervals (e.g., every 1 second, etc.), at predetermined frame intervals (e.g., every 30 frames, etc.), or at any timing for being notified by corresponding three-dimensional data encoding device 100. Accordingly, three-dimensional data decoding device 120 is enabled to start a jump playback from a point cloud that is not a beginning of a bitstream and for which an inter prediction point is not referred to, so that there is a possibility that random accessibility or error tolerance of the bitstream can be improved.

In a case where a bitstream has encoded data into which geometry information indicated by coordinates represented by Cartesian coordinates is encoded, three-dimensional data decoding device 120 decodes the geometry information indicated by the coordinates represented by Cartesian coordinates. In a case where a bitstream has encoded data into which geometry information indicated by coordinates represented by polar coordinates is encoded, three-dimensional data decoding device 120 decodes the geometry information indicated by the coordinates represented by polar coordinates.

FIG. 4 is a flowchart illustrating an example of a procedure of encoding each three-dimensional point in a prediction tree (Predtree) by three-dimensional data encoding device 100.

In this example, three-dimensional data encoding device 100 first determines an intra prediction point from a reference point cloud for intra prediction (S101). Three-dimensional data encoding device 100 may determine the intra prediction point using, for example, a method for determining a prediction point using a prediction tree disclosed in the embodiment already described. For example, three-dimensional data encoding device 100 may generate a prediction tree using encoded three-dimensional points and select one or more candidate points from the encoded three-dimensional points based on the prediction tree. Three-dimensional data encoding device 100 may determine, as the intra prediction point, a prediction point that gives the smallest code amount from among at least one intra prediction point that is determined by at least one of the methods described above. Three-dimensional data encoding device 100 may determine, as the intra prediction point, a prediction point that gives the smallest sum of absolute values (or sum of squares) of coordinate residuals from among at least one intra prediction point that is determined by at least one of the methods described above.

Next, three-dimensional data encoding device 100 outputs parameters relating to intra prediction (S102). In a case where the number of candidates for the methods for determining an intra prediction point determined in step S101 is two or more, three-dimensional data encoding device 100 may output, to a bitstream, information of a selected candidate for the determining method as the parameters relating to intra prediction.

Next, three-dimensional data encoding device 100 determines an inter prediction point by referring to at least one candidate point that is extracted from an inter prediction point cloud. For example, three-dimensional data encoding device 100 may determine one candidate point as the inter prediction point or may determine, as the inter prediction point, a prediction point having coordinates that are average values of sets of coordinates of candidate points. Alternatively, three-dimensional data encoding device 100 may determine, as the inter prediction point, a prediction point having coordinates that are average values of sets of coordinates of the intra prediction point and at least one candidate point.

Here, as the at least one candidate point, three-dimensional data encoding device 100 may search for a point that is positioned in the vicinity of the intra prediction point (S103).

Next, three-dimensional data encoding device 100 may give index values to at least one determined inter prediction point in such a manner that a smaller index value is given to an inter prediction point nearer to the intra prediction point (S104).

Next, three-dimensional data encoding device 100 determines whether the search has completed (S105). In a case where the search has completed (Yes in S105), the procedure proceeds to next step S106, and in a case where the search has not completed (No in S105), the procedure returns to step S103. The completion may be determined by finding a predetermined number of inter prediction points, may be determined by completion of a search of the entire point cloud within a predetermined range, or may be determined by satisfaction of one of finding the predetermined number of inter prediction points and the completion of a search of the entire point cloud within the predetermined range.

Next, three-dimensional data encoding device 100 determines a prediction method (S106). Specifically, three-dimensional data encoding device 100 determines the intra prediction or the inter prediction as a method for determining a prediction point. In other words, three-dimensional data encoding device 100 determines which of the intra prediction point and the inter prediction point is determined as the prediction point. For example, three-dimensional data encoding device 100 may determine, as the prediction method, a method for predicting a prediction point that gives a smaller code amount from between the intra prediction point and the inter prediction point. Three-dimensional data encoding device 100 may determine, as the prediction method, a method for predicting a prediction point that gives a smaller sum of absolute values (or sum of squares) of coordinate residuals from between the intra prediction point and the inter prediction point.

Three-dimensional data encoding device 100 determines whether a mode of the determined prediction method is an inter mode indicating that the prediction method is the inter prediction or an intra prediction mode indicating that the prediction method is the intra prediction (S107).

In a case where the determined prediction method is the inter prediction (inter mode in S107), three-dimensional data encoding device 100 outputs identification information indicating that an inter prediction point is determined as a prediction point (e.g., flag) to the bitstream (S108).

Next, three-dimensional data encoding device 100 outputs, to the bitstream, information of the number of candidate points to be used for determining coordinates of the inter prediction point, index values of the candidate points to be used, and the like, as parameters relating to inter prediction (S109). The index values may be assigned to one or more candidate points to be used for determining the predicted value.

In a case where the determined method for the prediction is the intra prediction (intra mode in S107), three-dimensional data encoding device 100 outputs identification information indicating that an intra prediction point is determined as the prediction point (e.g., flag) to the bitstream (S111). The items of identification information in step S108 and step S111 are items of information indicating which of the inter prediction point and the intra prediction point is determined as the prediction point.

After step S109 or step S111, three-dimensional data encoding device 100 encodes coordinate information of a current three-dimensional point to be encoded by referring to the prediction point found by the determined prediction method (S110).

In this manner, three-dimensional data encoding device 100 determines at least one inter prediction point by referring to the inter prediction point cloud and the intra prediction point, determines the method for finding the prediction point from the intra prediction point and the inter prediction point, and encodes geometry information (coordinate information) of the current three-dimensional point by referring to the prediction point.

Three-dimensional data encoding device 100 may be configured, in step S103, to search for the inter prediction point, without referring to the intra prediction point, in the vicinity of a three-dimensional point that is uniquely determined independently of the parameters relating to intra prediction, such as a three-dimensional point encoded immediately before the current three-dimensional point (e.g., a three-dimensional point corresponding to an ancestor node in the prediction tree such as a parent node). In this case, three-dimensional data encoding device 100 may be configured not to perform step S102 immediately after step S101 but to perform step S102 immediately after step S111.

FIG. 5 is a flowchart illustrating an example of a procedure of decoding each three-dimensional point in a prediction tree (Predtree) by three-dimensional data decoding device 120. FIG. 5 provides decoding of a bitstream that is generated under the procedure of encoding in FIG. 4. In other words, the bitstream includes encoded first residual signals (prediction residuals) and index values that are assigned to candidate points to be used for calculating a predicted value.

In this example, three-dimensional data decoding device 120 first obtains the parameters relating to intra prediction from the bitstream (S121).

Next, based on the parameters relating to intra prediction, three-dimensional data decoding device 120 determines an intra prediction point (S122). Specifically, three-dimensional data decoding device 120 determines the intra prediction point by the same method as step S101 in FIG. 4. Three-dimensional data decoding device 120 is notified of the parameters relating to intra prediction by corresponding three-dimensional data encoding device 100 and determines the intra prediction point based on the parameters relating to intra prediction. The parameters relating to intra prediction are obtained in step S121 and include information for specifying at least one method for determining the intra prediction point and a parameter accompanying the information.

Next, three-dimensional data decoding device 120 obtains identification information indicating a mode of the prediction method from the bitstream (S123).

Next, three-dimensional data decoding device 120 determines whether the obtained identification information indicates the inter mode indicating that the prediction method is the inter prediction or the intra prediction mode indicating that the prediction method is the intra prediction (S124).

In a case where the prediction method is the inter prediction (inter mode in S124), three-dimensional data decoding device 120 obtains parameters relating to inter prediction from the bitstream (S125).

Next, three-dimensional data decoding device 120 performs processes for determining an inter prediction point (S126 to S129). Specifically, three-dimensional data decoding device 120 determines the inter prediction point by the same method as steps S103 to S105 in FIG. 4. For example, three-dimensional data decoding device 120 determines the inter prediction point by referring to at least one candidate point that is extracted from an inter prediction point cloud. For example, three-dimensional data decoding device 120 may determine one candidate point as the inter prediction point or may determine, as the inter prediction point, a prediction point having coordinates that are average values of sets of coordinates of candidate points. Alternatively, three-dimensional data decoding device 120 may determine, as the inter prediction point, a prediction point having coordinates that are average values of sets of coordinates of the intra prediction point and at least one candidate point.

Here, as the at least one candidate point, three-dimensional data decoding device 120 may search for a point that is positioned in the vicinity of the intra prediction point (S126).

Next, three-dimensional data decoding device 120 may give index values to at least one determined inter prediction point in such a manner that a smaller index value is given to an inter prediction point nearer to the intra prediction point (S127).

Next, three-dimensional data decoding device 120 determines whether the search has completed (S128). In a case where the search has completed (Yes in S128), the procedure proceeds to next step S129, and in a case where the search has not completed (No in S128), the procedure returns to step S126. The completion may be determined by finding a predetermined number of inter prediction points, may be determined by completion of a search of the entire point cloud within a predetermined range, or may be determined by satisfaction of one of finding the predetermined number of inter prediction points and the completion of a search of the entire point cloud within the predetermined range.

Next, three-dimensional data decoding device 120 determines the inter prediction point based on the parameters relating to inter prediction while referring to the inter prediction point cloud and the intra prediction point (S129). For example, three-dimensional data decoding device 120 determines the inter prediction point by identifying candidate points to be used for determining coordinates of the inter prediction point based on the information of the number of candidate points to be used for determining coordinates of the inter prediction point and the index values assigned to the candidate points to be used that are included in the parameters relating to inter prediction and by determining coordinates of the inter prediction point using the identified candidate points. In other words, three-dimensional data decoding device 120 selects one candidate point from decoded three-dimensional points based on the index values included in the bitstream.

After step S129 or in a case of the intra mode in step S124, three-dimensional data decoding device 120 decodes geometry information (coordinate information) of a current three-dimensional point to be decoded by referring to the prediction point found by the specified prediction method (S130).

In this manner, in the case where the prediction method is the inter prediction, three-dimensional data decoding device 120 decodes the coordinate information of the point to be decoded by referring to the inter prediction point, and in the case where the prediction method is the intra prediction, three-dimensional data decoding device 120 decodes the coordinate information of the point to be decoded by referring to the intra prediction point.

Three-dimensional data decoding device 120 may be configured, in step S126, to search for the inter prediction point, without referring to the intra prediction point, in the vicinity of a three-dimensional point that is uniquely determined independently of the parameters relating to intra prediction, such as a three-dimensional point decoded immediately before the current three-dimensional point (e.g., a three-dimensional point corresponding to an ancestor node in the prediction tree such as a parent node). In this case, three-dimensional data decoding device 120 may be configured to perform step S121 and step S122 not immediately before step S123 but in the case where the intra mode is determined in step S124.

FIG. 6 is a block diagram of three-dimensional data encoding device 130 according to a variation of the present embodiment. FIG. 6 illustrates processors relating to encoding geometry information (geometry) of a point cloud. However, three-dimensional data encoding device 130 may include other processors such as processors that performs encoding or the like of attribute information of the point cloud. In inter prediction and intra prediction, a point cloud to be encoded is encoded while an encoded point cloud is referred to. Compared with three-dimensional data encoding device 100 in FIG. 1, three-dimensional data encoding device 130 differs in its configuration and operation in that coordinate transformer 131 for transforming a point cloud having items of geometry information represented by Cartesian coordinates to items of geometry information represented by polar coordinates and encoding the items of geometry information represented by polar coordinates is included, in that a prediction residual of geometry information represented by polar coordinates (a first residual signal) is not quantized, and in that a second residual signal in Cartesian coordinates, which is equivalent to an error that occurs in transformation between Cartesian coordinates and polar coordinates. At the same time, compared with three-dimensional data encoding device 100, three-dimensional data encoding device 130 is the same in its configuration and operation in regards other than the regards described above.

Three-dimensional data encoding device 130 includes coordinate transformer 131, grouper 132, buffer 133, buffer 134, intra predictor 135, buffer 136, motion compensator 137, inter predictor 138, switcher 139, coordinate transformer 140, buffer 141, quantizer 142, and entropy encoder 143.

Coordinate transformer 131 transforms a coordinate system of geometry information of a target point cloud which is data of an input point cloud to be encoded from a Cartesian coordinate system to a polar coordinate system. In other words, coordinate transformer 131 transforms a coordinate system of Cartesian-coordinate geometry information of one three-dimensional point to be encoded to generate polar-coordinate geometry information. The point cloud to be encoded that is transformed in polar coordinates is output to grouper 132.

From the target point cloud being the point cloud to be encoded that is transformed in polar coordinates grouper 132 extracts a point cloud to be a prediction tree (Predtree) which is a unit for encoding, and sets the point cloud as one group. Buffer 133 retains a generated prediction tree. For example, buffer 133 may initialize retained data for each prediction tree. Three-dimensional points included in a prediction tree (Predtree) retained in buffer 133 are subjected one by one to a process of encoding.

A difference between each of three-dimensional points included in the prediction tree retained in buffer 133 (each point to be encoded) and a prediction point selected for the point to be encoded (first residual signal) is calculated. The first residual signal is a residual signal of geometry information represented in polar coordinates. The first residual signal will be referred to also as a prediction residual. The first residual signal is an example of a first residual. Since items of geometry information of the three-dimensional points retained in buffer 133 are transformed into the polar coordinate system, the first residual is a difference between a transformed polar-coordinate geometry information and a predicted value.

Then, the first residual signal and the prediction point are added together and retained in buffers 134 and 136 as a decoded point subjected to the encoding process. Geometry information of the decoded point retained in buffers 134 and 136 is represented by polar coordinates. In this regard, buffers 134 and 136 differ in function from buffers 105 and 107 but are the same in function as buffers 105 and 107 in other respects, respectively.

Likewise, intra predictor 135, motion detector/compensator 137, inter predictor 138, and switcher 139 differ in function from intra predictor 106, motion compensator 108, inter predictor 109, and switcher 110 in that geometry information of a three-dimensional point to be processed is represented by polar coordinates but are the same in function as intra predictor 106, motion compensator 108, inter predictor 109, and switcher 110 in other respects, respectively.

Coordinate transformer 140 obtains the same decoded point as the decoded point retained in buffers 134 and 136 and transforms a coordinate system of geometry information of the obtained decoded point from the polar coordinate system to the Cartesian coordinate system. In other words, coordinate transformer 140 inversely transforms the coordinate system of the polar-coordinate geometry information transformed by coordinate transformer 131 to generate Cartesian-coordinate geometry information.

Buffer 141 retains the geometry information of the three-dimensional point that is input into three-dimensional data encoding device 130 and represented by Cartesian coordinates.

Then, a difference (second residual signal) between the input Cartesian-coordinate geometry information and the Cartesian-coordinate geometry information of which the coordinate system is transformed from the polar coordinate system to the Cartesian coordinate system by coordinate transformer 140 is calculated. The second residual signal is an example of a second residual. In other words, the second residual signal is a difference between the Cartesian-coordinate geometry information that is not subjected to coordinate transformation by coordinate transformer 131 and the geometry information that is once transformed to polar coordinates and further inversely transformed to the Cartesian coordinate system. The second residual signal is a transformation error occurring in the coordinate transformation.

Quantizer 142 quantizes the second residual signal.

Entropy encoder 143 entropy encodes the first residual signal and the quantized second residual signal to generate items of encoded data and outputs a bitstream including the items of encoded data.

In this manner, three-dimensional data encoding device 130 transforms a coordinate system of geometry information of a three-dimensional point from the Cartesian coordinate system to the polar coordinate system and encodes polar-coordinate geometry information. Accordingly, in a case where a point cloud generated by obtaining a three-dimensional position of a neighbor object with respect to a sensor position, as in LiDAR, is encoded, the precision of predicting a point to be encoded can be improved, so that there is a possibility that coding efficiency can be improved.

FIG. 7 is a block diagram of three-dimensional data decoding device 150 according to the variation of the present embodiment. FIG. 7 illustrates processors relating to decoding geometry information (geometry) of a point cloud. However, three-dimensional data decoding device 150 may include other processors such as processors that perform decoding or the like of attribute information of the point cloud. Three-dimensional data decoding device 150 performs inter prediction decoding, in which a point cloud to be decoded is decoded while a decoded point cloud is referred to. For example, three-dimensional data decoding device 150 decodes a bitstream generated by three-dimensional data encoding device 130 illustrated in FIG. 6. Compared with three-dimensional data decoding device 120 in FIG. 3, three-dimensional data decoding device 150 differs in its configuration and operation in that the inverse quantization of the first residual signal (prediction residual) is not performed and in that a second residual signal in Cartesian coordinates, which is equivalent to a transformation error occurring in transformation between Cartesian coordinates and polar coordinates is entropy decoded, inversely quantized, reproduced, added to a point that is transformed from a corresponding decoded point in polar coordinates into Cartesian coordinates, and output as a decoded point in Cartesian coordinates. At the same time, compared with three-dimensional data decoding device 120, three-dimensional data decoding device 150 is the same in regards other than the regards described above.

Three-dimensional data decoding device 150 includes entropy decoder 151, buffer 152, intra predictor 153, buffer 154, motion compensator 155, inter predictor 156, switcher 157, coordinate transformer 158, and inverse quantizer 159.

Entropy decoder 151 entropy decodes the input bitstream for each three-dimensional point in a prediction tree (Predtree) to generate a first residual signal and a quantized second residual signal. The first residual signal for each three-dimensional point is added to a predicted value based on a prediction point corresponding to the three-dimensional point and then generated (output) as a decoded point represented by polar coordinates.

Buffer 152 retains the generated decoded points as a reference point cloud for intra prediction. For example, buffer 152 may initialize retained data for each prediction tree (target point cloud). Buffer 154 retains the generated decoded points as a reference point cloud for inter prediction. For example, buffer 154 may initialize retained data for each prediction tree (target point cloud). Geometry information of the decoded point retained in buffers 152 and 154 is represented by polar coordinates. In this regard, buffers 152 and 154 differ in function from buffers 123 and 125 but are the same in function as buffers 123 and 125 in other respects, respectively.

Likewise, intra predictor 153, motion compensator 155, inter predictor 156, and switcher 157 differ in function from intra predictor 124, motion compensator 126, inter predictor 127, and switcher 128 in that geometry information of a three-dimensional point to be processed is represented by polar coordinates but are the same in function as intra predictor 124, motion compensator 126, inter predictor 127, and switcher 128 in other respects, respectively.

Coordinate transformer 158 obtains the same decoded point as the decoded point retained in buffers 152 and 154 and transforms a coordinate system of geometry information of the obtained decoded point from the polar coordinate system to the Cartesian coordinate system.

Inverse quantizer 159 inverse quantizes the quantized second residual signal to reproduce the second residual signal.

The Cartesian-coordinate geometry information obtained by the coordinate transformation by coordinate transformer 158 and the second residual signal reproduced by the inverse quantization by inverse quantizer 159 are added together and generate (output) as a decoded point including the Cartesian-coordinate geometry information.

In this manner, three-dimensional data decoding device 150 includes means for transforming a coordinate system of a decoded point having polar-coordinate geometry information from the polar coordinate system to the Cartesian coordinate system and adding the decoded point to the second residual signal in Cartesian coordinates that is equivalent to an error occurring in transformation between Cartesian-coordinate geometry information and polar-coordinate geometry information. Accordingly, three-dimensional data decoding device 150 is capable of decoding a point cloud from an encoded bitstream (e.g., a bitstream output from three-dimensional data encoding device 130 in FIG. 6) while referring to an encoded point cloud in polar coordinates.

FIG. 8 is a diagram for describing an example of an inter prediction method according to the embodiment.

The inter prediction method is performed by three-dimensional data encoding devices 100 and 130 and three-dimensional data decoding devices 120 and 150.

FIG. 8 illustrates a view with mutually orthogonal X, Y, and Z axes in which three-dimensional points are projected on the XY plane viewed from the Z-axis direction. Current frame 300 in FIG. 8 includes three-dimensional points for which an arbitrary first position is set as origin O1. Each of the three-dimensional points in current frame 300 has a distance component, a first angle component (a horizontal angle), and a second angle component (an elevation angle); these components are, respectively, the distance between the three-dimensional point and origin O1, the angle of the direction passing through origin O1 and the three-dimensional point with respect to a reference direction passing through origin O1 on the XY plane, and the angle of the direction passing through origin O1 and the three-dimensional point with respect to the XY plane. Reference frame 310 in FIG. 8 includes three-dimensional points for which an arbitrary second position is set as origin 02. Each of the three-dimensional points in reference frame 310 has a distance component, a first angle component (a horizontal angle), and a second angle component (an elevation angle); these components are, respectively, the distance between the three-dimensional point and origin 02, the angle of the direction passing through origin O2 and the three-dimensional point with respect to a reference direction passing through origin O2 on the XY plane, and the angle of the direction passing through origin O2 and the three-dimensional point with respect to the XY plane.

In FIG. 8, a single-hatched circle represents current point 301. Current point 301 is a point to be encoded in encoding, and a point to be decoded in decoding. White circles represent processed points 302. Processed points 302 are encoded three-dimensional points in encoding, and decoded three-dimensional points in decoding. Cross-hatched circles represent three-dimensional points 311, 312, and 313 that are inter prediction candidate points. Three-dimensional points 311, 312, and 313 as inter prediction candidate points are candidates for calculating a residual relative to the current point in inter prediction. Dashed-line circles represent unprocessed points 303. Unprocessed points 303 are unencoded three-dimensional points in encoding, i.e., three-dimensional points yet to be subjected to an encoding process, and undecoded three-dimensional points in decoding, i.e., three-dimensional points yet to be subjected to a decoding process.

In FIG. 8, current point 301 is a three-dimensional point in a point cloud included in current frame 300. In inter prediction, a prediction point for calculating a residual relative to current point 301 is selected from a point cloud (processed three-dimensional points) included in reference frame 310 different from current frame 300. Three-dimensional data encoding devices 100 and 130 or three-dimensional data decoding devices 120 and 150 determine, from among three-dimensional points 311, 312, and 313 in reference frame 310, the inter prediction point for current point 301 in current frame 300. For example, three-dimensional data encoding devices 100 and 130 or three-dimensional data decoding devices 120 and 150 may use, as the prediction point, three-dimensional point 311 having an angle component (e.g., a horizontal angle) that is the same as or similar to that of current point 301, and encode the position of current point 301. It is to be noted that a similar angle component means an angle component with a difference not greater than a predetermined value. A first angle represented by the horizontal angle of three-dimensional point 311 is similar to a second angle represented by the horizontal angle of current point 301. It can also be stated that the first angle corresponds to the second angle.

The inter prediction candidate points may be selected to include three-dimensional point 312, which is after three-dimensional point 311 in the processing order. The inter prediction candidate points may be selected to further include three-dimensional point 311 at a position corresponding to current point 301 in current frame 300, and three-dimensional point 312, which is after three-dimensional point 311 in the processing order. Here, the processing order is the encoding order in encoding, and the decoding order in decoding. The processing order may also be, for example, an order in which three-dimensional points are generated based on the result of measurement performed by a sensor (e.g., a LiDAR) that, while rotating, emits laser light around the sensor to measure the distances and directions to objects, thereby generating three-dimensional points.

In intra prediction, the positions of processed points 302 are already obtained, which are three-dimensional points before current point 301 in the processing order in current frame 300. However, the positions of unprocessed points 303, which are three-dimensional points after current point 301 in the processing order, are not obtained yet. In inter prediction, the prediction point is selected from reference frame 310 consisting of processed three-dimensional points. The inter prediction candidate points may therefore be selected to include three-dimensional point 311 at a position corresponding to current point 301, as well as three-dimensional point 312 immediately after three-dimensional point 311 in the processing order. Thus, three-dimensional points 311 and 312 likely to be at positions different from the position of the intra prediction candidate point can be added to the prediction candidate points. This may allow selecting, as the prediction point, a three-dimensional point likely to be at a position closer to current point 301. It may therefore be possible to reduce the residual between current point 301 and the prediction point, thereby improving the coding efficiency.

Each three-dimensional point of the point cloud in current frame 300 and each corresponding three-dimensional point of the point cloud in reference frame 310 may have the same index value (Laser ID) of the elevation angle of the scan line of the sensor (e.g., a LiDAR) that measured the positions of the three-dimensional points. Alternatively, each three-dimensional point of the point cloud in current frame 300 and each corresponding three-dimensional point of the point cloud in reference frame 310 may have different index values (Laser ID) of the elevation angle of the scan line of the sensor (e.g., a LiDAR) that measured the positions of the three-dimensional points. That is, a first index value (first Laser ID) of the elevation angle of each three-dimensional point in current frame 300 and a second index value (second Laser ID) of the elevation angle of each corresponding three-dimensional point in reference frame 310 may be the same or different.

The example in FIG. 8 selects the following inter prediction candidate points: three-dimensional point 311 having an angle component in reference frame 310 that is the same as or similar to the horizontal angle (Azimuthal Position) of current point 301; three-dimensional point 312 immediately after three-dimensional point 311 in the processing order; and three-dimensional point 313 immediately before three-dimensional point 311 in the processing order. Alternatively, only some of these three-dimensional points may be selected as the inter prediction candidate points. For example, three-dimensional points 311 and 312 may be selected as the inter prediction candidate points. Also in the example in FIG. 8, three-dimensional point 312 immediately after three-dimensional point 311 in the processing order is selected as an inter prediction candidate point after three-dimensional point 311 in the processing order. Alternatively, a predetermined number of three-dimensional points immediately after three-dimensional point 311 in the processing order may be selected. Similarly, in the example in FIG. 8, three-dimensional point 313 immediately before three-dimensional point 311 in the processing order is selected as an inter prediction candidate point before three-dimensional point 311 in the processing order. Alternatively, a predetermined number of three-dimensional points immediately before three-dimensional point 311 in the processing order may be selected. The predetermined number may be two or may be an integer greater than two. Points coming after in the processing order may also be expressed as subsequent points in the processing order, and points coming before in the processing order may also be expressed as preceding points in the processing order.

FIG. 9 is a diagram for describing an example of a procedure of determining the inter prediction candidate points in the inter prediction method according to the embodiment. FIG. 9 illustrates current frame 300 and reference frame 310 as in FIG. 8.

Because the position of current point 301 has not been determined, three-dimensional data encoding devices 100 and 130 or three-dimensional data decoding devices 120 and 150 select, in current frame 300, processed point 302 before current point 301 in the processing order (S301). This determines a reference position for current point 301. For example, processed point 302 may be a three-dimensional point processed (i.e., encoded or decoded) last in the point cloud of current frame 300 among three-dimensional points having the same index value (Laser ID) of the elevation angle of the scan line of the sensor as current point 301. Processed point 302 may be selected in any manner that can be employed by both three-dimensional data encoding devices 100 and 130 and three-dimensional data decoding devices 120 and 150.

Three-dimensional data encoding devices 100 and 130 or three-dimensional data decoding devices 120 and 150 select, in reference frame 310, three-dimensional point 313 having an angle component of the horizontal angle that is the same as or similar to that of processed point 302 selected at above step S301 (S302). Three-dimensional point 313 selected may be determined to be a third prediction point.

Three-dimensional data encoding devices 100 and 130 or three-dimensional data decoding devices 120 and 150 select three-dimensional point 311 (S303). Specifically, three-dimensional point 311 has an angle component of the horizontal angle that is away from three-dimensional point 313 selected at above step S302, in the direction of the processing-order arrow by a distance determined based on the sampling rate of the sensor. The devices estimate that the angle component of the horizontal angle of three-dimensional point 311 in reference frame 310 is likely to be close to that of current point 301. Three-dimensional point 311 selected may be determined to be a first prediction point.

Further, as at above step S303, three-dimensional data encoding devices 100 and 130 or three-dimensional data decoding devices 120 and 150 select three-dimensional point 312 (S304). Specifically, three-dimensional point 312 has an angle component of the horizontal angle that is away from three-dimensional point 311 selected at above step S303, in the direction of the processing-order arrow by a distance determined based on the sampling rate of the sensor. The devices estimate that three-dimensional point 312 is the three-dimensional point at the next sampling point. Three-dimensional point 312 selected may be determined to be a second prediction point.

At steps S303 and S304, three-dimensional data encoding devices 100 and 130 or three-dimensional data decoding devices 120 and 150 might fail to find three-dimensional points having an angle component of the horizontal angle that is away in the direction of the processing-order arrow by a distance determined based on the sampling rate of the sensor. The devices may then continue searching until they find such three-dimensional points. This search may be repeated, for example until two three-dimensional points located after current point 301 in the processing order are found.

In steps S303 and S304, the distance determined based on the sampling rate of the sensor may be the sampling rate itself of the sensor or may be the sampling rate of the sensor rounded to, e.g., a power of two. Notification of the distance determined based on the sampling rate of the sensor may be, for example, provided in a header such as the GPS by three-dimensional data encoding devices 100 and 130 to three-dimensional data decoding devices 120 and 150. In steps S302 to S304, a possible manner of selecting the three-dimensional point having the same or similar angle component of the horizontal angle may include searching for a point at the smallest distance in each of the positive and negative directions of the horizontal angle, and selecting one at the smaller distance of the two points at the smallest distances in the positive and negative directions. The three-dimensional point having the same or similar angle component of the horizontal angle may be selected in any manner that can be employed by both three-dimensional data encoding devices 100 and 130 and three-dimensional data decoding devices 120 and 150. Only a fixed one of the positive and negative directions of the horizontal angle may be searched to select a point at the smallest distance.

The processing order of the three-dimensional points included in one frame (i.e., the encoding order or the decoding order) may be determined to be repetitions of: a round at a first horizontal angle with the elevation angle changed in a first rotation direction; a round at a second horizontal angle with the elevation angle changed in the first rotation direction, etc. In this processing order, step S301 may be skipped and step S302 may be performed to determine the first prediction point with reference to current point 301. In this case, the third prediction point may be determined in a manner similar to step S303 or S304 with reference to the first prediction point in the direction opposite to the processing-order arrow in FIG. 9. Alternatively, with reference to the index (column_pos) of the horizontal angle of the reference point for the first prediction point, a point that refers to a reference point corresponding to subsequently processed column_pos may be selected as the second prediction point, and a point that refers to a reference point corresponding to precedingly processed column_pos may be selected as the third prediction point.

FIG. 10 is a diagram for describing an example of the inter prediction method extended for inter prediction involving multiple reference frames. In addition to current frame 300 and reference frame 310 as in FIG. 8, FIG. 10 further illustrates reference frame 320. Reference frame 320 in FIG. 10 includes three-dimensional points for which an arbitrary third position is set as origin O3. Each of the three-dimensional points in reference frame 320 has a distance component, a first angle component (a horizontal angle), and a second angle component (an elevation angle); these components are, respectively, the distance between the three-dimensional point and origin O3, the angle of the direction passing through origin O3 and the three-dimensional point with respect to a reference direction passing through origin O3 on the XY plane, and the angle of the direction passing through origin O3 and the three-dimensional point with respect to the XY plane.

In each of the reference frames, the procedure described with reference to FIG. 9 is applied to determine the first prediction point, the second prediction point, and the third prediction point.

Because the position of current point 301 has not been determined, three-dimensional data encoding devices 100 and 130 or three-dimensional data decoding devices 120 and 150 select, in current frame 300, processed point 302 before current point 301 in the processing order (S301). This determines a reference position for current point 301. For example, processed point 302 may be a three-dimensional point processed (i.e., encoded or decoded) last in the point cloud of current frame 300 among three-dimensional points having the same index value (Laser ID) of the elevation angle of the scan line of the sensor as current point 301. Processed point 302 may be selected in any manner that can be employed by both three-dimensional data encoding devices 100 and 130 and three-dimensional data decoding devices 120 and 150.

Three-dimensional data encoding devices 100 and 130 or three-dimensional data decoding devices 120 and 150 select, in reference frame 310, three-dimensional point 313 having an angle component of the horizontal angle that is the same as or similar to that of processed point 302 selected at above step S301 (S302a). Three-dimensional point 313 selected may be determined to be the third prediction point.

Similarly, three-dimensional data encoding devices 100 and 130 or three-dimensional data decoding devices 120 and 150 select, in reference frame 320 different from reference frame 310, three-dimensional point 323 having an angle component of the horizontal angle that is the same as or similar to that of processed point 302 selected at above step S301 (S302b). Three-dimensional point 323 selected may be determined to be the third prediction point.

Three-dimensional data encoding devices 100 and 130 or three-dimensional data decoding devices 120 and 150 select three-dimensional point 311 in reference frame 310 (S303a). Specifically, three-dimensional point 311 has an angle component of the horizontal angle that is away from three-dimensional point 313 selected at above step S302a, in the direction of the processing-order arrow by a distance determined based on the sampling rate of the sensor. The devices estimate that the angle component of the horizontal angle of three-dimensional point 311 in reference frame 310 is likely to be similar to that of current point 301. Three-dimensional point 311 selected may be determined to be the first prediction point.

Similarly, three-dimensional data encoding devices 100 and 130 or three-dimensional data decoding devices 120 and 150 select three-dimensional point 321 in reference frame 320 (S303b). Specifically, three-dimensional point 321 has an angle component of the horizontal angle that is away from three-dimensional point 323 selected at above step S302b, in the direction of the processing-order arrow by a distance determined based on the sampling rate of the sensor. The devices estimate that the angle component of the horizontal angle of three-dimensional point 321 in reference frame 320 is likely to be similar to that of current point 301. Three-dimensional point 321 selected may be determined to be the first prediction point.

Further, as at above step S303a, three-dimensional data encoding devices 100 and 130 or three-dimensional data decoding devices 120 and 150 select three-dimensional point 312 in reference frame 310 (S304a). Specifically, three-dimensional point 312 has an angle component of the horizontal angle that is away from three-dimensional point 311 selected at above step S303a, in the direction of the processing-order arrow by a distance determined based on the sampling rate of the sensor. The devices estimate that three-dimensional point 312 is the three-dimensional point at the next sampling point. Three-dimensional point 312 selected may be determined to be the second prediction point.

Similarly, as at above step S303b, three-dimensional data encoding devices 100 and 130 or three-dimensional data decoding devices 120 and 150 select three-dimensional point 322 in reference frame 320 (S304b). Specifically, three-dimensional point 322 has an angle component of the horizontal angle that is away from three-dimensional point 321 selected at above step S303b, in the direction of the processing-order arrow by a distance determined based on the sampling rate of the sensor. The devices estimate that three-dimensional point 322 is the three-dimensional point at the next sampling point. Three-dimensional point 322 selected may be determined to be the second prediction point.

At steps S303a and S303b and steps S304a and S304b, three-dimensional data encoding devices 100 and 130 or three-dimensional data decoding devices 120 and 150 might fail to find three-dimensional points having an angle component of the horizontal angle that is away in the direction of the processing-order arrow by a distance determined based on the sampling rate of the sensor. The devices may then continue searching until they find such three-dimensional points. This search may be repeated, for example until two three-dimensional points located after current point 301 in the processing order are found in each reference frame.

Although the above example illustrates the case of using two reference frames, three or more reference frames may be used to apply a similar process. Although the above example illustrates the case in which three prediction points are selected in each reference frame, different number of prediction points may be selected in different reference frames.

FIGS. 11 and 12 are diagrams for describing examples in which the method of determining the prediction point is applied to elevation angle directions. FIG. 11 illustrates an example in which measurement target 410 is traveling away from sensor 400. FIG. 12 illustrates an example in which measurement target 410 is traveling closer to sensor 400. FIGS. 11 and 12 each illustrate a relative positional relationship between sensor 400 and measurement target 410 in an example in which at least one of sensor 400 and measurement target 410 is traveling.

Sensor 400 is a LiDAR. Lines extending radially from the sensor represent laser paths toward measurement target 410. Three-dimensional data encoding devices 100 and 130 and three-dimensional data decoding devices 120 and 150 may perform inter prediction by adding, to the prediction point candidates, a three-dimensional point included in a laser of Laser ID of an elevation angle different from the elevation angle of Laser ID of a laser including the current point. For example, as illustrated in FIG. 11, measurement target 410 may be farther from sensor 400 when the point cloud of the current frame is measured than when the point cloud of the reference frame was measured. Three-dimensional data encoding devices 100 and 130 and three-dimensional data decoding devices 120 and 150 may perform inter prediction of the current point in laser 402 by adding, to the prediction point candidates, a three-dimensional point in laser 401. Laser 401 has Laser ID of an elevation angle farther from the horizontal reference than the elevation angle of Laser ID of laser 402 (i.e., is above laser 402). By contrast, for example, as illustrated in FIG. 12, measurement target 410 may be closer to sensor 400 when the point cloud of the current frame is measured than when the point cloud of the reference frame was measured. Three-dimensional data encoding devices 100 and 130 and three-dimensional data decoding devices 120 and 150 may perform inter prediction of the current point in laser 412 by adding, to the prediction point candidates, a three-dimensional point in laser 411. Laser 411 has Laser ID of an elevation angle closer to the horizontal reference than the elevation angle of Laser ID of laser 412 (i.e., is below laser 412).

Thus, if the distance between sensor 400 and measurement target 410 varies, three-dimensional data encoding devices 100 and 130 and three-dimensional data decoding devices 120 and 150 may perform inter prediction by adding, to the prediction point (Predictor) candidates, a three-dimensional point included in Laser ID different from Laser ID including the current point. This may achieve improved prediction efficiency.

FIG. 13 illustrates an example of a syntax for a three-dimensional point according to the embodiment. This syntax is an example of each node in a prediction tree.

InterFrameFlag indicates whether inter prediction is enabled. InterFrameFlag is set according to a higher-level syntax (such as the SPS, GPS, or slice header). The SPS is a parameter set (control information) for each sequence including multiple frames. The SPS is also a parameter set common to geometry information and attribute information. The GPS is a parameter set for each frame and is a parameter set for geometry information.

intra_pred_flag indicates whether the prediction method at the current point is intra prediction or not (i.e., inter prediction). Notification of intra_pred_flag may be provided if InterFrameFlag indicates that inter prediction is enabled for the frame including the three-dimensional point corresponding to this syntax. intra_pred_flag may be set to a value (e.g., 1) indicating intra prediction if InterFrameFlag indicates that inter prediction is disabled for this frame.

pred_mode indicates a prediction mode. The prediction mode is information indicating how the intra prediction point for the current point is determined. The prediction mode indicates the manner in which the prediction point is calculated based on the position(s) of one or more higher nodes for the current node in the prediction tree. Depending on pred_mode, notification of additional information for determining the intra prediction point may be provided.

inter_ref_frame_idx is information specifying the point cloud in the processing unit (e.g., a frame) referred to in the inter prediction of the current point. That is, the frame specified by inter_ref_frame_idx includes the prediction point for the inter prediction of the current point. Notification of inter_ref_frame_idx may be provided if intra_pred_flag is set to a value indicating inter prediction (e.g., 0) and if the number of reference frames NumRefFrames set according to a higher-level syntax (such as the SPS, GPS, or slice header) is greater than 1. If NumRefFrames is 1, notification of inter_ref_frame_idx may be omitted because the reference frame can be uniquely identified. inter_ref_frame_idx is an example of first identification information. The first identification information may be any information that identifies the point cloud in the processing unit including the prediction point for the inter prediction of the current point. The processing unit for the point cloud need not be limited to a frame but may be a slice.

inter_ref_point_idx is information that specifies the prediction point (Predictor) referred to in the inter prediction of the current point. Notification of inter_ref_point_idx may be provided if the number of prediction points in the reference frame NumRefPoints is greater than 1. If NumRefPoints is 1, notification of inter_ref_point_idx may be omitted because the prediction point can be uniquely identified. inter_ref_point_idx is an example of second identification information. The second identification information is information that identifies the prediction point for the inter prediction of the current point.

Thus, if there are multiple prediction points, notification of inter_ref_point_idx can be provided so that a prediction point can be specified among those determined by the inter prediction method. This allows consistent prediction processing to be performed in three-dimensional data encoding devices 100 and 130 and three-dimensional data decoding devices 120 and 150.

Next, three-dimensional data encoding devices 100 and 130 may give notification of a first difference (1st_residual_value) between geometry information (coordinate values) of the point to be encoded or to be decoded and geometry information (coordinate values) of the prediction point. It should be noted that there are cases where geometry information of a prediction point is called a predicted value. There are also cases where attribute information of a prediction point is called a predicted value. In the case where coordinate transformation of a decoded point is performed before each three-dimensional point is output from three-dimensional data decoding devices 120 and 150 (e.g., gps_coordinate_trans_enabled_flag = 1), notification of a second difference (2nd_residual_value) between geometry information (coordinate values) obtained by performing coordinate transformation to an original coordinate system such as the Cartesian coordinate system on a result of decoding in another coordinate system such as the polar coordinate system and original geometry information (coordinate values) may be given. Although an example of giving the notification of these items of difference information in one type of syntax is described, the notification of the items of difference information may be given in types of syntax such as positive-negative information and absolute value information.

Notification of these information items (InterFrameFlag, intra_pred_flag, pred_mode, inter_ref_frame_idx, inter_ref_point_idx, lst_residual_value, and 2nd_residual_value) may be provided by three-dimensional data encoding devices 100 and 130 to three-dimensional data decoding devices 120 and 150. This allows consistent prediction processing to be performed in three-dimensional data encoding devices 100 and 130 and three-dimensional data decoding devices 120 and 150. Three-dimensional data decoding devices 120 and 150 can therefore perform decoding without inconsistency with corresponding three-dimensional data encoding devices 100 and 130.

Thus, inter prediction with multiple prediction points may be used to predict information on the current point. It may therefore be possible to improve the accuracy of the prediction of the current point, thereby reducing the code amount.

FIG. 14 is a flowchart illustrating an example of arithmetic encoding in the case of inter prediction. Specifically, FIG. 14 illustrates an example of a procedure of arithmetic-encoding inter_ref_frame_idx, inter_ref_frame_idx, and 1st_residual_value[i] (i = 0,1,2) when intra_pred_flag in the syntax in FIG. 13 indicates inter prediction.

In this example, first, three-dimensional data encoding devices 100 and 130 determine whether NumRefFrames indicating the number of reference frames set according to a higher-level syntax (such as the SPS, GPS, or slice header) is greater than 1 (S131).

If NumRefFrames is greater than 1 (Yes at S131), three-dimensional data encoding devices 100 and 130 use context A to arithmetic-encode inter_ref_frame_idx, which is information specifying a frame referred to in the inter prediction of the three-dimensional point to be encoded (S132). Context A may be a context common to all inter_ref_frame_idx included in the point cloud serving as the processing unit such as a frame or slice, or may be a context determined according to inter_ref_frame_idx corresponding to a three-dimensional point located in a surrounding area of the point to be encoded. A three-dimensional point located in a surrounding area means a point spatially close to the three-dimensional point to be encoded, a point temporally close to the three-dimensional point to be encoded, or a point close to the three-dimensional point to be encoded in the encoding order. A point spatially close to the three-dimensional point to be encoded is a three-dimensional point within a predetermined distance from the three-dimensional point to be encoded. A point temporally close to the three-dimensional point to be encoded is a three-dimensional point included in a frame generated within a predetermined number of frames before or after the frame including the three-dimensional point to be encoded. A point close to the three-dimensional point to be encoded in the encoding order is a three-dimensional point within a predetermined number of places before or after the three-dimensional point to be encoded in the encoding order (e.g., three three-dimensional points encoded immediately before or after the three-dimensional point to be encoded). Context A is an example of a third context.

If NumRefFrames is not greater than 1 (i.e., NumRefFrames is 1) (No at S131), three-dimensional data encoding devices 100 and 130 set inter_ref_frame_idx to a specified value (e.g., 0) (S133).

Three-dimensional data encoding devices 100 and 130 determine whether the number of Predictors (prediction points) in the reference frame NumRefPoints is greater than 1 (S134).

If NumRefPoints is greater than 1 (Yes at S134), three-dimensional data encoding devices 100 and 130 arithmetic-encode inter_ref_point_idx using context B (S135). Context B may be determined based on inter_ref_frame_idx. Context B is an example of a first context. Step S135 is an example of a first process.

If NumRefPoints is not greater than 1 (i.e., NumRefPoints is 1) (No at S134), three-dimensional data encoding devices 100 and 130 set inter_ref_point_idx to a specified value (e.g., 0) (S136).

For the arithmetic encoding of inter_ref_point_idx, the same number of contexts may be used as the number of reference frames NumRefFrames. Alternatively, contexts fewer than NumRefFrames may be used, such as by using a shared context if inter_ref_frame_idx is not smaller than a predetermined number (e.g., 1 or 2).

Further, three-dimensional data encoding devices 100 and 130 determine context C according to at least one of inter_ref_frame_idx and inter_ref_point_idx, and, using context C determined, arithmetic-encode the residual 1st_residual_value[i] (i = 0,1,2) between the position (e.g., coordinate values) of the point to be encoded and the position (e.g., coordinate values) of the prediction point (S137). Context C is an example of a second context. Step S137 is an example of a second process.

For the arithmetic encoding of 1st_residual_value[i], the same number of contexts may be used as the number of combinations of the number of reference frames NumRefFrames and the number of Predictors in each reference frame NumRefPoints. Alternatively, contexts fewer than the number of combinations of NumRefFrames and NumRefPoints may be used, such as by using a shared context if inter_ref_frame_idx and inter_ref_point_idx are not smaller than a predetermined value (e.g., 1 or 2). The context used here does not necessarily need to be determined according to the combination of inter_ref_frame_idx and inter_ref_point_idx. Rather, the context may be determined according to either one of inter_ref_frame_idx and inter_ref_point_idx. That is, the context used for arithmetic encoding of information on the inter prediction of the current point may be determined based on at least one of inter_ref_frame_idx and inter_ref_point_idx. However, determining context C based on both inter_ref_frame_idx and inter_ref_point_idx may increase the coding efficiency. Further, the above illustrates an example in which notification of 1st_residual_value[i] is provided as a single syntax element of geometry information on the three-dimensional point. Alternatively, the geometry information on the three-dimensional point may be broken down into values such as the quotient and remainder resulting from dividing by a value that is set according to the sampling rate of the sensor (such as the angular intervals of the horizontal angle or elevation angle of a LiDAR), as well as into a positive or negative sign and the absolute value. Notification of the geometry information may then be provided using syntax elements corresponding to the respective values. The manner of determining context C for the arithmetic encoding of 1st_residual_value[i] may be applied to the arithmetic encoding of all the syntax elements resulting from breaking down 1st_residual_value[i], or may be applied to the arithmetic encoding of only some of the syntax elements.

One of steps S135 and S137 may be omitted. That is, three-dimensional data encoding devices 100 and 130 may arithmetic-encode inter_ref_point_idx using a predetermined context, rather than using context B determined based on inter_ref_frame_idx. Similarly, three-dimensional data encoding devices 100 and 130 may arithmetic-encode the residual 1st_residual_value[i] (i = 0,1,2) using a predetermined context.

FIG. 15 is a flowchart illustrating an example of arithmetic decoding in the case of inter prediction. Specifically, FIG. 15 illustrates an example of a procedure of arithmetic-decoding inter_ref_frame_idx, inter_ref_frame_idx, and 1st_residual_value[i] (i = 0,1,2) when intra_pred_flag in the syntax in FIG. 13 indicates inter prediction.

In this example, first, three-dimensional data decoding devices 120 and 150 determine whether NumRefFrames indicating the number of reference frames set according to a higher-level syntax (such as the SPS, GPS, or slice header) is greater than 1 (S141).

If NumRefFrames is greater than 1 (Yes at S141), three-dimensional data decoding devices 120 and 150 use context A to arithmetic-decode inter_ref_frame_idx, which is information specifying a frame referred to in the inter prediction of the three-dimensional point to be decoded (S142). Context A may be a context common to all inter_ref_frame_idx included in the point cloud serving as the processing unit such as a frame or slice, or may be a context determined according to inter_ref_frame_idx corresponding to a three-dimensional point located in a surrounding area of the point to be decoded. A three-dimensional point located in a surrounding area means a point spatially close to the three-dimensional point to be decoded, a point temporally close to the three-dimensional point to be decoded, or a point close to the three-dimensional point to be decoded in the decoding order. A point spatially close to the three-dimensional point to be decoded is a three-dimensional point within a predetermined distance from the three-dimensional point to be decoded. A point temporally close to the three-dimensional point to be decoded is a three-dimensional point included in a frame generated within a predetermined number of frames before or after the frame including the three-dimensional point to be decoded. A point close to the three-dimensional point to be encoded in the encoding order is a three-dimensional point within a predetermined number of places before or after the three-dimensional point to be encoded in the encoding order (e.g., three three-dimensional points encoded immediately before or after the three-dimensional point to be encoded). Context A is an example of the third context.

If NumRefFrames is not greater than 1 (i.e., NumRefFrames is 1) (No at S141), three-dimensional data decoding devices 120 and 150 set inter_ref_frame_idx to a specified value (e.g., 0) (S143).

Three-dimensional data decoding devices 120 and 150 determine whether the number of Predictors (prediction points) in the reference frame NumRefPoints is greater than 1 (S144).

If NumRefPoints is greater than 1 (Yes at S144), three-dimensional data decoding devices 120 and 150 arithmetic-decode inter_ref_point_idx using context B (S145). Context B may be determined based on inter_ref_frame_idx. Context B is an example of the first context. Step S145 is an example of the first process.

If NumRefPoints is not greater than 1 (i.e., NumRefPoints is 1) (No at S144), three-dimensional data decoding devices 120 and 150 set inter_ref_point_idx to a specified value (e.g., 0) (S146).

For the arithmetic decoding of inter_ref_point_idx, the same number of contexts may be used as the number of reference frames NumRefFrames. Alternatively, contexts fewer than NumRefFrames may be used, such as by using a shared context if inter_ref_frame_idx is not smaller than a predetermined number (e.g., 1 or 2).

Further, three-dimensional data decoding devices 120 and 150 determine context C according to at least one of inter_ref_frame_idx and inter_ref_point_idx, and, using context C determined, arithmetic-decode the residual 1st_residual_value[i] (i = 0,1,2) between the position (e.g., coordinate values) of the point to be decoded and the position (e.g., coordinate values) of the prediction point (S147). Context C is an example of the second context. Step S147 is an example of the second process.

For the arithmetic decoding of 1st_residual_value[i], the same number of contexts may be used as the number of combinations of the number of reference frames NumRefFrames and the number of Predictors in each reference frame NumRefPoints. Alternatively, contexts fewer than the number of combinations of NumRefFrames and NumRefPoints may be used, such as by using a shared context if inter_ref_frame_idx and inter_ref_point_idx are not smaller than a predetermined value (e.g., 1 or 2). The context used here does not necessarily need to be determined according to the combination of inter_ref_frame_idx and inter_ref_point_idx. Rather, the context may be determined according to either one of inter_ref_frame_idx and inter_ref_point_idx. That is, the context used for arithmetic decoding of information on the inter prediction of the current point may be determined based on at least one of inter_ref_frame_idx and inter_ref_point_idx. However, determining context C based on both inter_ref_frame_idx and inter_ref_point_idx may increase the coding efficiency. Further, the above illustrates an example in which notification of 1st_residual_value[i] is provided as a single syntax element of geometry information on the three-dimensional point. Alternatively, the geometry information on the three-dimensional point may be broken down into values such as the quotient and remainder resulting from dividing by a value that is set according to the sampling rate of the sensor (such as the angular intervals of the horizontal angle or elevation angle of a LiDAR), as well as into a positive or negative sign and the absolute value. Notification of the geometry information may then be provided using syntax elements corresponding to the respective values. The manner of determining context C for the arithmetic decoding of 1st_residual_value[i] may be applied to the arithmetic decoding of all the syntax elements resulting from breaking down 1st_residual_value[i], or may be applied to the arithmetic decoding of only some of the syntax elements.

One of steps S135 and S137 may be omitted. That is, three-dimensional data encoding devices 100 and 130 may arithmetic-encode inter_ref_point_idx using a predetermined context, rather than using context B determined based on inter_ref_frame_idx. Similarly, three-dimensional data encoding devices 100 and 130 may arithmetic-encode the residual 1st_residual_value[i] (i = 0,1,2) using a predetermined context.

Thus, contexts used for arithmetic encoding and decoding of information on the inter prediction of the current point are determined based on at least one of inter_ref_frame_idx and inter_ref_point_idx. Here, inter_ref_frame_idx is an example of the first identification information, which is information identifying the point cloud serving as the processing unit. The first identification information may be extended to information identifying, as the point cloud serving as the processing unit, a third point cloud that has not been motion-compensated (e.g., a first frame or a first slice) and a fourth point cloud obtained by performing motion compensation on the third point cloud (e.g., a second frame or a second slice). That is, the first identification information identifying the third point cloud may be different from the first identification information identifying the fourth point cloud. In other words, the first identification information may vary depending on whether the first point cloud is the third point cloud or the fourth point cloud.

Thus, contexts may be adaptively determined based on encoded or decoded information. This may be able to improve the accuracy of predicting the probability that each syntax element will take a predetermined value (e.g., 0 or 1), and therefore to reduce the code amount.

It should be noted that the devices, processes, syntax, and so on, disclosed using FIG. 1 to FIG. 15 may be implemented by being combined with at least part of the embodiment. Furthermore, part of the devices, processes, syntax, and so on, disclosed using FIG. 1 to FIG. 15 may be implemented by being combined with another part of the embodiment. Moreover, all of the structural components disclosed using FIG. 1 to FIG. 15 are not necessarily required all of the time, and it is acceptable to have only some of the structural components included.

As described above, three-dimensional data encoding devices 100 and 130 perform the process (three-dimensional data encoding method) illustrated in FIG. 16. Three-dimensional data encoding devices 100 and 130 perform at least one of: a first process of determining a first context based on first identification information identifying a first point cloud including a first prediction point that is referred to for calculating a predicted value of a first three-dimensional point according to inter prediction (S151), and arithmetic-encoding, using the first context determined, second identification information identifying the first prediction point (S152); or a second process of determining a second context based on at least one of the first identification information or the second identification information (S151), and arithmetic-encoding, using the second context determined, a prediction residual of the first three-dimensional point (S152).

Here, the first three-dimensional point is, for example, the current point to be encoded. The first point cloud that includes the first prediction point is one of point clouds which is the processing unit, and is, for example, a frame, a slice, or the like. The first identification information is, for example, information (inter_ref_frame_idx) identifying a frame including the first prediction point of the point to be encoded in the inter prediction. The second identification information is, for example, information (inter_ref_point_idx) indicating the first prediction point of the point to be encoded in the inter prediction. The first context is, for example, context B. The second context is, for example, context C.

When the point cloud that is referred to for inter prediction of the first three-dimensional point and the point cloud that is referred to for inter prediction of another three-dimensional point are the same, the identification information of prediction points in the point cloud tend to be similar. In view of this, in the first process, second identification information identifying a prediction point is arithmetic-encoded using the first context that is based on first identification information identifying the point cloud. Accordingly, it is possible for encoding efficiency to improve.

When inter prediction is performed on the first three-dimensional point and another three-dimensional point, and at least one of the point clouds to be referred to in the inter prediction or the prediction points in the point cloud are the same, there is a tendency for the prediction residual of the first three-dimensional point and the prediction residual of the other three-dimensional point to be approximately the same. In view of this, in the second process, the prediction residual is arithmetic-encoded using the second context that is based on at least one of first identification information identifying the point cloud or second identification information identifying the prediction point. Accordingly, it is possible for encoding efficiency to improve.

For example, the prediction residual may be the difference between the position of the first three-dimensional point and the predicted value of the position (for example, 1st_residual_value[ i ](i=0,1,2)). However, the prediction residual may be the difference between an attribute value of the first three-dimensional point and the predicted value of the attribute value.

For example, three-dimensional data encoding method further includes determining a third context based on first identification information that identifies a second point cloud and is provided for a second three-dimensional point, the second point cloud including a second prediction point that is referred to in inter prediction of the second three-dimensional point, the second three-dimensional point being located in a surrounding area of the first three-dimensional point; and arithmetic-encoding, using the third context determined, the first identification information provided for the first three-dimensional point. The third context is, for example, context A.

Accordingly, since a third context for arithmetic-encoding the first identification information of the first point cloud is determined based on the first identification information of the second point cloud, the code amount can be reduced. Therefore, encoding efficiency can be improved.

It should be noted that the first process and the second process are not required for performing arithmetic-encoding of the first identification information using the third context.

For example, the first point cloud is one of a third point cloud that has not been motion compensated and a fourth point cloud obtained by performing motion compensation on the third point cloud, and the first identification information is different depending on whether the first point cloud is the third point cloud or the fourth point cloud.

When performing inter prediction on the first three-dimensional point, even if prediction points belong to the same point cloud, there is a tendency for information regarding the inter prediction of the first three-dimensional point to significantly different depending on whether the point cloud is the third point cloud that has been motion compensated or the fourth point cloud that has not been compensated. For this reason, by distinguishing between the third point cloud that has been motion compensated and the fourth point cloud that has not been compensated, information regarding inter prediction can be arithmetic-encoded using a first context that is in accordance with whether the point cloud is motion compensated or not. Therefore, the precision of predicting information regarding inter prediction can be improved, and it may be possible to reduce the code amount. Therefore, it may be possible to improve encoding efficiency.

For example, each of three-dimensional data encoding devices 100 and 130 includes a processor and memory, and the processor performs the above process using the memory.

Three-dimensional data decoding devices 120 and 150 perform at least one of: a first process of determining a first context based on first identification information identifying a first point cloud including a first prediction point that is referred to for calculating a predicted value of a first three-dimensional point according to inter prediction (S161), and arithmetic-decoding, using the first context determined, second identification information identifying the first prediction point (S162); or a second process of determining a second context based on at least one of the first identification information or the second identification information (S161), and arithmetic-decoding, using the second context determined, a prediction residual of the first three-dimensional point (S162).

Here, the first three-dimensional point is, for example, the current point to be decoded. The first point cloud that includes the first prediction point is one of point clouds which is the processing unit, and is, for example, a frame, a slice, or the like. The first identification information is, for example, information (inter_ref_frame_idx) identifying a frame including the first prediction point of the point to be decoded in the inter prediction. The second identification information is, for example, information (inter_ref_point_idx) indicating the first prediction point of the point to be decoded in the inter prediction. The first context is, for example, context B. The second context is, for example, context C.

When the point cloud that is referred to for inter prediction of the first three-dimensional point and the point cloud that is referred to for inter prediction of another three-dimensional point are the same, the identification information of prediction points in the point cloud tend to be similar. In view of this, in the first process, it is possible to appropriately arithmetic-decode second identification information identifying a prediction point, whose code amount may have been reduced as a result of being arithmetic-encoded using the first context that is based on first identification information identifying the point cloud.

When inter prediction is performed on the first three-dimensional point and another three-dimensional point, and at least one of the point clouds to be referred to in the inter prediction or the prediction points in the point cloud are the same, there is a tendency for the prediction residual of the first three-dimensional point and the prediction residual of the other three-dimensional point to be approximately the same. In view of this, in the second process, it is possible to appropriately arithmetic-decode the prediction residual whose code amount may have been reduced as a result of being arithmetic-encoded using the second context that is based on at least one of first identification information identifying the point cloud or second identification information identifying the prediction point.

For example, the prediction residual is the difference between the position of the first three-dimensional point and the predicted value of the position (for example, 1st_residual_value[ i ](i=0,1,2)). However, the prediction residual may be the difference between an attribute value of the first three-dimensional point and the predicted value of the attribute value.

For example, the three-dimensional data decoding method further includes: determining a third context based on first identification information that identifies a second point cloud and is provided for a second three-dimensional point, the second point cloud including a second prediction point that is referred to in inter prediction of the second three-dimensional point, the second three-dimensional point being located in a surrounding area of the first three-dimensional point; and arithmetic-decoding, using the third context determined, the first identification information provided for the first three-dimensional point. The third context is, for example, context A.

Accordingly, since a third context for arithmetic-decoding the first identification information of the first point cloud is determined based on the first identification information of the second point cloud, it is possible to appropriately arithmetic-decode the first identification information of the first point cloud, whose code amount may have been reduced as a result of being arithmetic-encoded using the third context.

It should be noted that the first process and the second process are not required for performing arithmetic-encoding of the first identification information using the third context.

For example, the first point cloud is one of a third point cloud that has not been motion compensated and a fourth point cloud obtained by performing motion compensation on the third point cloud, and the first identification information is different depending on whether the first point cloud is the third point cloud or the fourth point cloud.

When performing inter prediction on the first three-dimensional point, even if prediction points belong to the same point cloud, there is a tendency for information regarding the inter prediction of the first three-dimensional point to significantly different depending on whether the point cloud is the third point cloud that has been motion compensated or the fourth point cloud that has not been compensated. For this reason, by distinguishing between the third point cloud that has been motion compensated and the fourth point cloud that has not been compensated, it is possible to appropriately arithmetic-decode information regarding inter prediction, whose code amount may have been reduced as a result of being arithmetic-encoded using a first context that is in accordance with whether the point cloud is motion compensated or not.

For example, each of three-dimensional data decoding devices 120 and 150 includes a processor and memory, and the processor performs the above process using the memory.

A three-dimensional data encoding device, a three-dimensional data decoding device, and the like according to the embodiments of the present disclosure have been described above, but the present disclosure is not limited to these embodiments.

Note that each of the processors included in the three-dimensional data encoding device, the three-dimensional data decoding device, and the like according to the above embodiments is typically implemented as a large-scale integrated (LSI) circuit, which is an integrated circuit (IC). These may take the form of individual chips, or may be partially or entirely packaged into a single chip.

Such IC is not limited to an LSI, and thus may be implemented as a dedicated circuit or a general-purpose processor. Alternatively, a field programmable gate array (FPGA) that allows for programming after the manufacture of an LSI, or a reconfigurable processor that allows for reconfiguration of the connection and the setting of circuit cells inside an LSI may be employed.

Moreover, in the above embodiments, the structural components may be implemented as dedicated hardware or may be realized by executing a software program suited to such structural components. Alternatively, the structural components may be implemented by a program executor such as a CPU or a processor reading out and executing the software program recorded in a recording medium such as a hard disk or a semiconductor memory.

The present disclosure may also be implemented as a three-dimensional data encoding method, a three-dimensional data decoding method, or the like executed by the three-dimensional data encoding device, the three-dimensional data decoding device, and the like.

Also, the divisions of the functional blocks shown in the block diagrams are mere examples, and thus a plurality of functional blocks may be implemented as a single functional block, or a single functional block may be divided into a plurality of functional blocks, or one or more functions may be moved to another functional block. Also, the functions of a plurality of functional blocks having similar functions may be processed by single hardware or software in a parallelized or time-divided manner.

Also, the processing order of executing the steps shown in the flowcharts is a mere illustration for specifically describing the present disclosure, and thus may be an order other than the shown order. Also, one or more of the steps may be executed simultaneously (in parallel) with another step.

A three-dimensional data encoding device, a three-dimensional data decoding device, and the like according to one or more aspects have been described above based on the embodiments, but the present disclosure is not limited to these embodiments. The one or more aspects may thus include forms achieved by making various modifications to the above embodiments that can be conceived by those skilled in the art, as well forms achieved by combining structural components in different embodiments, without materially departing from the spirit of the present disclosure.

### [Industrial Applicability]

The present disclosure is applicable to a three-dimensional data encoding device and a three-dimensional data decoding device.

### [Reference Signs List]

100, 130 three-dimensional data encoding device
101, 132 grouper
102, 105, 107, 123, 125, 133, 134, 136, 141, 152, 154 buffer
103, 142 quantizer
104, 122, 159 inverse quantizer
106, 124, 135, 153 intra predictor
108, 126, 137, 155 motion compensator
109, 127, 138, 156 inter predictor
110, 128, 139, 157 switcher
111, 143 entropy encoder
120, 150 three-dimensional data decoding device
121, 151 entropy decoder
131, 140, 158 coordinate transformer
200 prediction tree
201 first node
211 second node
212 third node
221 fourth node
300 current frame
301 current point
302 processed point
303 unprocessed point
310, 320 reference frame
311-313, 321-323 three-dimensional point
400 sensor
401, 402, 411, 412 laser
410 measurement target

## Claims

1. A three-dimensional data encoding method comprising:
performing at least one of:
a first process of determining a first context based on first identification information identifying a first point cloud including a first prediction point that is referred to for calculating a predicted value of a first three-dimensional point according to inter prediction, and arithmetic-encoding, using the first context determined, second identification information identifying the first prediction point; or
a second process of determining a second context based on at least one of the first identification information or the second identification information, and arithmetic-encoding, using the second context determined, a prediction residual of the first three-dimensional point.

2. The three-dimensional data encoding method according to claim 1, wherein
the prediction residual is a difference between a position of the first three-dimensional point and a predicted value of the position.

3. The three-dimensional data encoding method according to claim 1 or 2, further comprising:
determining a third context based on first identification information that identifies a second point cloud and is provided for a second three-dimensional point, the second point cloud including a second prediction point that is referred to in inter prediction of the second three-dimensional point, the second three-dimensional point being located in a surrounding area of the first three-dimensional point; and
arithmetic-encoding, using the third context determined, the first identification information provided for the first three-dimensional point.

4. The three-dimensional data encoding method according to claim 1, wherein
the first point cloud is one of a third point cloud that has not been motion compensated and a fourth point cloud obtained by performing motion compensation on the third point cloud, and
the first identification information is different depending on whether the first point cloud is the third point cloud or the fourth point cloud.

5. A three-dimensional data decoding method comprising:
performing at least one of:
a first process of determining a first context based on first identification information identifying a first point cloud including a first prediction point that is referred to for calculating a predicted value of a first three-dimensional point according to inter prediction, and arithmetic-decoding, using the first context determined, second identification information identifying the first prediction point; or
a second process of determining a second context based on at least one of the first identification information or the second identification information, and arithmetic-decoding, using the second context determined, a prediction residual of the first three-dimensional point.

6. The three-dimensional data decoding method according to claim 5, wherein
the prediction residual is a difference between a position of the first three-dimensional point and a predicted value of the position.

7. The three-dimensional data decoding method according to claim 5 or 6, further comprising:
determining a third context based on first identification information that identifies a second point cloud and is provided for a second three-dimensional point, the second point cloud including a second prediction point that is referred to in inter prediction of the second three-dimensional point, the second three-dimensional point being located in a surrounding area of the first three-dimensional point; and
arithmetic-decoding, using the third context determined, the first identification information provided for the first three-dimensional point.

8. The three-dimensional data decoding method according to claim 5, wherein
the first point cloud is one of a third point cloud that has not been motion compensated and a fourth point cloud obtained by performing motion compensation on the third point cloud, and
the first identification information is different depending on whether the first point cloud is the third point cloud or the fourth point cloud.

9. A three-dimensional data encoding device comprising:
a processor; and
memory, wherein
using the memory, the processor performs at least one of:
a first process of determining a first context based on first identification information identifying a first point cloud including a first prediction point that is referred to for calculating a predicted value of a first three-dimensional point according to inter prediction, and arithmetic-encoding, using the first context determined, second identification information identifying the first prediction point; or
a second process of determining a second context based on at least one of the first identification information or the second identification information, and arithmetic-encoding, using the second context determined, a prediction residual of the first three-dimensional point.

10. A three-dimensional data decoding device comprising:
a processor; and
memory, wherein
using the memory, the processor performs at least one of:
a first process of determining a first context based on first identification information identifying a first point cloud including a first prediction point that is referred to for calculating a predicted value of a first three-dimensional point according to inter prediction, and arithmetic-decoding, using the first context determined, second identification information identifying the first prediction point; or
a second process of determining a second context based on at least one of the first identification information or the second identification information, and arithmetic-decoding, using the second context determined, a prediction residual of the first three-dimensional point.
